(19) Europäisches Patentamt / European Patent Office / Office européen des brevets

(11) **EP 4 576 017 B1**

(12) **EUROPEAN PATENT SPECIFICATION**

(45) Date of publication and mention
of the grant of the patent:
**08.07.2026 Bulletin 2026/28**

(21) Application number: **24189034.2**

(22) Date of filing: **16.07.2024**

(51) International Patent Classification (IPC):
**G06V 10/96** (2022.01)      **G06V 20/56** (2022.01)
**G06N 3/08** (2023.01)

(52) Cooperative Patent Classification (CPC):
**G06V 20/588; G06V 10/96;** G06N 3/08

(54) **METHOD FOR TRAINING DEEP LEARNING MODEL CAPABLE OF EXTRACTING ROAD FEATURES BASED ON MULTI-TASKS AND COMPUTING DEVICE USING THE SAME**

VERFAHREN ZUM TRAINIEREN EINES TIEFENLERNMODELLS ZUR EXTRAKTION VON STRASSENMERKMALEN AUF DER BASIS VON MULTITASKS UND COMPUTERVORRICHTUNG DAMIT

PROCÉDÉ D'APPRENTISSAGE DE MODÈLE D'APPRENTISSAGE PROFOND CAPABLE D'EXTRAIRE DES CARACTÉRISTIQUES DE ROUTE SUR LA BASE DE TÂCHES MULTIPLES ET DISPOSITIF INFORMATIQUE L'UTILISANT

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **22.12.2023 KR 20230190502**

(43) Date of publication of application:
**25.06.2025 Bulletin 2025/26**

(73) Proprietor: **Autonomous A2Z Co., Ltd.**
**Gyeongsan-si, Gyeongsangbuk-do 38428 (KR)**

(72) Inventors:
• **WON, Woong Jae**
**08735 Seoul (KR)**
• **SHIN, Kicheol**
**13261 Seongnam-si (KR)**
• **HAN, Ji Hyeong**
**14102 Anyang-si (KR)**

(74) Representative: **AWA Sweden AB**
**Box 45086**
**104 30 Stockholm (SE)**

(56) References cited:
**CN-A- 111 178 253     CN-A- 112 347 933**

• **WON WOONG-JAE ET AL: "Multi-Task Deep Learning Design and Training Tool for Unified Visual Driving Scene Understanding", 2019 19TH INTERNATIONAL CONFERENCE ON CONTROL, AUTOMATION AND SYSTEMS (ICCAS), INSTITUTE OF CONTROL, ROBOTICS AND SYSTEMS - ICROS, 15 October 2019 (2019-10-15), pages 356 - 360, XP033699100, DOI: 10.23919/ICCAS47443.2019.8971526**
• **ZHAO QINGHUA ET AL: "Lane line detection based on the codec structure of the attention mechanism", JOURNAL OF REAL-TIME IMAGE PROCESSING, SPRINGER, DE, vol. 19, no. 4, 9 May 2022 (2022-05-09), pages 715 - 726, XP037888590, ISSN: 1861-8200, [retrieved on 20220509], DOI: 10.1007/S11554-022-01217-Z**
• **TABELINI LUCAS ET AL: "PolyLaneNet: Lane Estimation via Deep Polynomial Regression", 2020 25TH INTERNATIONAL CONFERENCE ON PATTERN RECOGNITION (ICPR), IEEE, 10 January 2021 (2021-01-10), pages 6150 - 6156, XP033909004, DOI: 10.1109/ICPR48806.2021.9412265**

**Description**

This present application claims the benefit of the earlier filing date of Korean non-provisional patent application No. 10-2023-0190502, filed on December 22, 2023.

The present invention relates to a method for training a deep learning model capable of extracting road features based on multi-tasks and a computing device using the same.

A technique for estimating a current position of an autonomous vehicle is very important.

However, conventional techniques for estimating the position of the autonomous vehicle relate to merely matching one or more HD maps using detection information on lane lines. According to the conventional techniques, since one or more lane line detection models based on edge computing models are merely applied, performances for estimating the lane lines are hampered by changes of image qualities, shadows, and noises such as covered and damaged lane lines. Also, according to the conventional techniques, since only the lane lines are considered while matching the detection information on the lane lines, if the lane lines are misdetected, the performances are extremely degraded.

Therefore, the applicant has invented a model capable of estimating the road features for HD map matching in case that the lane lines on the road do not exist or are occluded, e.g., unexposed due to another object.

Acknowledged is the following prior art:

D1 CN 111 178 253 A (SHENZHEN MINIEYE INNOVATION TECH CO LTD) 19 May 2020 (2020-05-19)
D2 CN 112 347 933 A (ZHEJIANG DAHUA TECHNOLOGY CO) 9 February 2021 (2021-02-09)
D3 WON WOONG-JAE ET AL: "Multi-Task Deep Learning Design and Training Tool for Unified Visual Driving Scene Understanding", 2019 19TH INTERNATIONAL CONFERENCE ON CONTROL, AUTOMATION AND SYSTEMS (ICCAS), INSTITUTE OF CONTROL, ROBOTICS AND SYSTEMS - ICROS, 15 October 2019 (2019-10-15), pages 356-360, XP033699100, DOI: 10.23919/ICCAS47443.2019.8971526
D4 ZHAO QINGHUA ET AL: "Lane line detection based on the codec structure of the attention mechanism", JOURNAL OF REAL-TIME IMAGE PROCESSING, SPRINGER, DE, vol. 19, no. 4, 9 May 2022 (2022-05-09), pages 715-726, XP037888590, ISSN: 1861-8200, DOI: 10.1007/ S11554-022-01217-Z [retrieved on 2022-05-09]
D5 TABELINI LUCAS ET AL: "PolyLaneNet: Lane Estimation via Deep Polynomial Regression", 2020 25TH INTERNATIONAL CONFERENCE ON PATTERN RECOGNITION (ICPR), IEEE, 10 January 2021 (2021-01-10), pages 6150-6156, XP033909004, DOI: 10.1109/ ICPR48806.2021.9412265

It is an object of the present disclosure to solve all the aforementioned problems.

It is another object of the present disclosure to perform the HD map matching in case that the lane lines on the road do not exist or are occluded.

It is still another object of the present disclosure to apply a model based on multi-tasks for minimizing operations related to redundancy among a 1-st training task for estimating the lane lines on the road, a 2-nd training task for estimating the lines of the structures related to the road, and a 3-rd training task for semantic segmentation on the lane lines on the road and the structures.

It is still yet another object of the present disclosure to provide the method of training the multi-tasks based on heterogeneous data for minimizing costs of establishing learning data.

It is still yet another object of the present disclosure to provide a prediction model which is robust to noises of videos and is capable of minimizing post-processes. The minimum embodiments are set out in the appended claims.

In accordance with one example embodiment of the present disclosure, there is provided a method for training a deep learning model capable of extracting one or more road features based on multi-tasks, comprising steps of: (a) a computing device (i) setting a 1-st training task for estimating lane lines on a road, a 2-nd training task for estimating lines of structures related to the road, and a 3-rd training task for semantic segmentation of the lane lines on the road and the structures, (ii) setting each of initial selection probabilities for each of the 1-st training task to the 3-rd training task, (iii) setting each of cardinal numbers of a 1-st training step to a 3-rd training step required to complete one epoch for each of the 1-st training task to the 3-rd training task, and (iv) determining a cardinal number of total steps included in an entire epoch based on the cardinal numbers of the 1-st training step to the 3-rd training step; (b) in response to determining that a total training progress is smaller than or equal to a 1-st threshold progress or a 1-st threshold step, the computing device (i) randomly selecting a specific training task among the 1-st training task to the 3-rd training task by referring to each of the initial selection probabilities for each of the 1-st training task to the 3-rd training task and (ii) calculating one or more losses for the specific training task; and (c) the computing device updating one or more model parameters related to the specific training task.

As one example, at the step (b) in response to detecting that the total training progress is larger than the 1-st threshold progress or the 1-st threshold step, the computing device (i) calculates a specific training performance achievement ratio for a specific training task by referring to a ratio of a specific current training performance on the specific training task to a specific highest training performance, (ii) calculates a specific training weight corresponding to the specific training task by referring to the specific training performance achievement ratio, (iii) calculates an adjusted selection probability for the specific training task by referring to the specific training weight and a cardinal number of a specific training step, and (iv) determines a probability of the specific training task being selected among the 1-st training task to the 3-rd training task as the adjusted selection probability.

As one example, at the step (b), (i) the specific training weight is represented as a result of subtracting a ratio of the specific training weight to a sum of a 1-st training performance achievement ratio to a 3-rd training performance achievement ratio from 1 and (ii) the adjusted selection probability is represented as a result of multiplying the specific training weight by a ratio of the cardinal number of the specific training step to a sum of the cardinal numbers of the 1-st training step to the 3-rd training step.

As one example, the method further comprises a step of: (d) in response to detecting that the model parameters are updated, the computing device (i) calculating a specific current training performance of the specific training task based on a specific current step of the specific training task, (ii) calculating a specific training performance achievement ratio of the specific training task by referring to a ratio of the specific current training performance to a specific highest training performance of the specific training task, (iii) calculating a total training progress by referring to a 1-st training performance achievement ratio to a 3-rd training performance achievement ratio each of which corresponds to the 1-st training task to the 3-rd training task, wherein the specific training performance achievement ratio is one of the 1-st training performance achievement ratio to the 3-rd training performance achievement ratio, and (iv) after adding 1 to a cardinal number of the specific current step, if a sum of the cardinal numbers of the 1-st current step to the 3-rd current step is smaller than the cardinal number of the total steps, supporting the steps of (b), (c) and (d) to be repeatedly performed.

As one example, the deep learning model (i) includes, as shared layers, (i-1) an encoding layer where image data acquired from at least one camera mounted on an autonomous vehicle are inputted and (i-2) a decoding layer where encoded output data outputted from the encoding layer are inputted and (ii) includes, as individual layers, (ii-1) a 1-st training task layer which has a 1-st task header where decoded output data outputted from the decoding layer are inputted, wherein the 1-st task header corresponds to the 1-st training task, and has a 1-st output function for applying one or more output function operations to 1-st task header output data outputted from the 1-st task header, (ii-2) a 2-nd training task layer which has a 2-nd task header where the decoded output data are inputted, wherein the 2-nd task header corresponds to the 2-nd training task, and has a 2-nd output function for applying the output function operations to 2-nd task header output data outputted from the 2-nd task header, and (ii-3) a 3-rd training layer which has a 3-rd task header where the decoded output data are inputted, wherein the 3-rd task header corresponds to the 3-rd training task, and has a specific Softmax function for applying one or more classification operations to 3-rd task header output data outputted from the 3-rd task header.

As one example, at the step (c), in response to determining that the total training progress is smaller than or equal to a 2-nd threshold progress or a 2-nd threshold step, the computing device trains the shared layers and the individual layers of the deep learning model and, in response to determining that the total training progress is larger than the 2-nd threshold progress or the 2-nd threshold step, on condition that the shared layers are frozen, the computing device updates one or more specific model parameters of a specific individual layer among the individual layers corresponding to the specific training task.

As one example, the deep learning model (i) includes, as a shared layer, an encoding layer where image data acquired from at least one camera mounted on an autonomous vehicle are inputted and (ii) includes, as individual layers, (ii-1) a 1-st training task layer which has a 1-st decoder where encoded output data outputted from the encoding layer are inputted, wherein the 1-st decoder corresponds to the 1-st training task, and has a 1-st output function for applying one or more output function operations to 1-st decoded output data outputted from the 1-st decoder, (ii-2) a 2-nd training task layer which has a 2-nd decoder where the encoded output data are inputted, wherein the 2-nd decoder corresponds to the 2-nd training task, and has a 2-nd output function for applying the output function operations to 2-nd decoded output data outputted from the 2-nd decoder, and (ii-3) a 3-rd training layer which has a 3-rd decoder where the encoded output data are inputted, wherein the 3-rd decoder corresponds to the 3-rd training task, and a specific Softmax function for applying one or more classification operations to 3-rd decoded output data outputted from the 3-rd decoder.

As one example, at the step (c), in response to determining that the total training progress is smaller than or equal to a 2-nd threshold progress or a 2-nd threshold step, the computing device trains the shared layers and the individual layers of the deep learning model and, in response to determining that the total training progress is larger than the 2-nd threshold progress or the 2-nd threshold step, on condition that the shared layers are frozen, the computing device updates one or more specific model parameters of a specific individual layer among the individual layers corresponding to the specific training task.

As one example, the method further comprises steps of: (e) in response to inputting lane line candidate data which correspond to the 1-st training task and are outputted from the deep learning model, the computing device (i) labelling the lane line candidate data by each channel, (ii) selecting one or more specific label blobs which are the largest among label blobs and deleting remaining label blobs, (iii) calculating one or more center point coordinates of the specific label blobs, and (iv) applying a moving average filter to the center point coordinates, thereby determining prediction information on the lane lines; and (f) the computing device performing one or more matching processes by referring to the prediction information on the lane lines and one or more HD maps, thereby estimating a position and a posture of an autonomous vehicle.

As one example, after the step (e), in response to acquiring the prediction information on the lane lines and information on the semantic segmentation, the computing device (i) classifies certain overlapped part between the prediction information on the lane lines and the information on the semantic segmentation into one or more left boundary lines and one or more right boundary lines of one or more specific lane lines, (ii) determines one or more overlapped center coordinates in between the left boundary lines and the right boundary lines as center points of one or more exposed lane lines, and (iii) restores one or more areas corresponding to one or more unexposed lane lines by referring to the left boundary lines and the right boundary lines of the exposed lane lines, thereby determining modification information on the lane lines; and wherein, at the step (f), the computing device performs the matching processes by referring to the modification information on the lane lines and the HD maps, thereby estimating the position and the posture of the autonomous vehicle.

As one example, at the step (a), the computing device (i) additionally sets a 4-th training task for simultaneously training the 1-st training task to 3-rd training task, (ii) additionally sets an initial selection probability for the 4-th training task, (iii) additionally sets a cardinal number of a 4-th training step required to complete one epoch for the 4-th training task, and (iv) determines the cardinal number of the total steps included in the entire epoch based on the cardinal numbers of the 1-st training step to the 4-th training step; and, at the step (b), in response to determining that the total training progress is smaller than or equal to the 1-st threshold progress or the 1-st threshold step, the computing device (i) randomly selects the specific training task among the 1-st training task to the 4-th training task by referring to each of the initial selection probabilities for each of the 1-st training task to the 4-th training task and (ii) calculates the losses for the specific training task.

As one example, the method further comprises a step of: (g) in response to detecting that the model parameters are updated, the computing device (i) evaluating a specific current training performance of the specific training task based on a specific current step of the specific training task, (ii) calculating a specific training performance achievement ratio of the specific training task by referring to a ratio of the specific current training performance to a specific highest training performance of the specific training task, (iii) calculating a total training progress by referring to a 1-st training performance achievement ratio to a 4-th training performance achievement ratio each of which corresponds to the 1-st training task to the 4-th training task, wherein the specific training performance achievement ratio is one of the 1-st training performance achievement ratio to the 4-th training performance achievement ratio, and (iv) after adding 1 to a cardinal number of the specific current step, if a sum of the cardinal numbers of the 1-st current step to the 4-th current step is smaller than the cardinal number of the total steps, supporting the steps of (b), (c) and (g) to be repeatedly performed.

In accordance with another aspect of the present disclosure, there is provided a computing device for training a deep learning model capable of extracting one or more road features based on multi-tasks, comprising: at least one memory which saves instructions; and at least one processor configured to execute the instructions to perform the processes of: (I) the processor (i) setting a 1-st training task for estimating lane lines on a road, a 2-nd training task for estimating lines of structures related to the road, and a 3-rd training task for semantic segmentation of the lane lines on the road and the structures, (ii) setting each of initial selection probabilities for each of the 1-st training task to the 3-rd training task, (iii) setting each of cardinal numbers of a 1-st training step to a 3-rd training step required to complete one epoch for each of the 1-st training task to the 3-rd training task, and (iv) determining a cardinal number of total steps included in an entire epoch based on the cardinal numbers of the 1-st training step to the 3-rd training step; (II) in response to determining that a total training progress is smaller than or equal to a 1-st threshold progress or a 1-st threshold step, the processor (i) randomly selecting a specific training task among the 1-st training task to the 3-rd training task by referring to each of the initial selection probabilities for each of the 1-st training task to the 3-rd training task and (ii) calculating one or more losses for the specific training task; and (III) the processor updating one or more model parameters related to the specific training task.

As one example, at the process (II), in response to detecting that the total training progress is larger than the 1-st threshold progress or the 1-st threshold step, the processor (i) calculates a specific training performance achievement ratio for a specific training task by referring to a ratio of a specific current training performance on the specific training task to a specific highest training performance, (ii) calculates a specific training weight corresponding to the specific training task by referring to the specific training performance achievement ratio, (iii) calculates an adjusted selection probability for the specific training task by referring to the specific training weight and a cardinal number of a specific training step, and (iv) determines a probability of the specific training task being selected among the 1-st training task to the 3-rd training task as the adjusted selection probability.

As one example, at the process (II), (i) the specific training weight is represented as a result of subtracting a ratio of the specific training weight to a sum of a 1-st training performance achievement ratio to a 3-rd training performance achievement ratio from 1 and (ii) the adjusted selection probability is represented as a result of multiplying the specific training weight by a ratio of the cardinal number of the specific training step to a sum of the cardinal numbers of the 1-st training step to the 3-rd training step.

The accompanying drawings used to explain example embodiments of the present disclosure are only part of example embodiments of the present disclosure and other drawings can be obtained based on the accompanying drawings by those skilled in the art of the present disclosure without inventive work.

Fig. 1 is a drawing schematically illustrating a configuration of a computing device which trains a deep learning model capable of extracting road features based on multi-tasks.

Fig. 2 is a flow chart schematically illustrating a method for training the deep learning model capable of extracting the road features based on the multi-tasks.

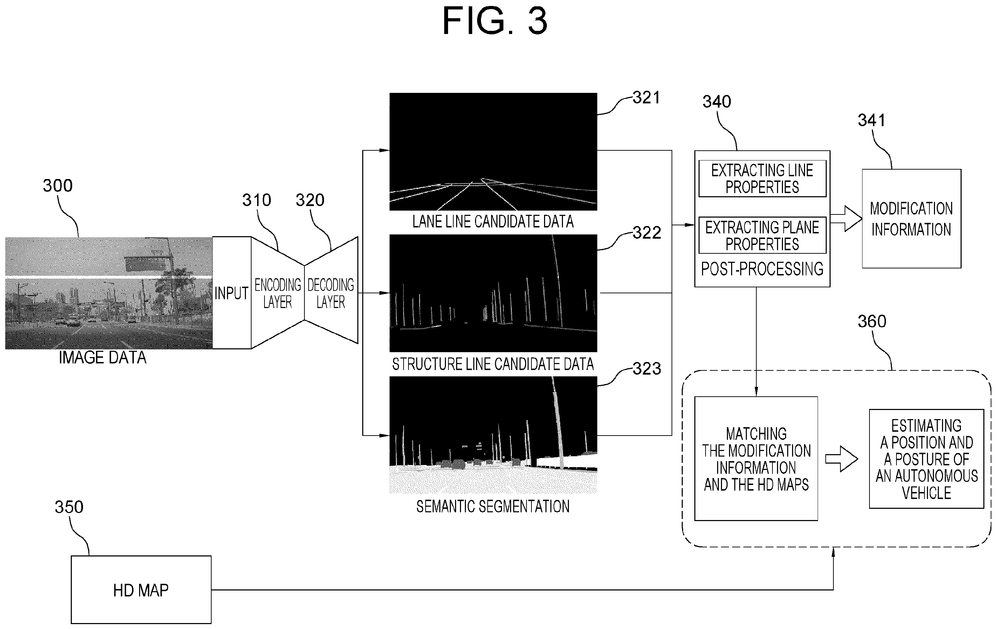

Fig. 3 is a drawing exemplarily illustrating a configuration for estimating the road features based on the deep learning model. In detail, Fig. 3 shows (i) a configuration for executing a 1-st training task, i.e., a task for estimating lane lines, a 2-nd training task, i.e., a task for estimating lines of structures on the road, and a 3-rd training task, i.e., a task for semantic segmentation task and (ii) a process of predicting a position and a posture of an autonomous vehicle by using HD maps and modification information acquired by matching a result of estimating the lane lines and a result of the semantic segmentation task and by matching a result of estimating the lines of the structures on the road and the result of the semantic segmentation task.

Fig. 4 is a drawing exemplarily illustrating an example of GT data for training the lane lines, GT data for training the lines of the structures on the road, and GT data for training semantic segmentation, wherein all of the GT data correspond to image data.

Fig. 5 is a drawing exemplarily illustrating a decoder-shared structure of the deep learning model comprised of (i) shared layers including an encoding layer and a decoding layer and (ii) individual layers including a 1-st training task layer to a 3-rd training task layer.

Fig. 6 is a drawing exemplarily illustrating a decoder-unshared structure of the deep learning model comprised of (i) a shared layer including an encoding layer and (ii) individual layers including a 1-st training task layer to a 3-rd training task layer each of which includes its corresponding decoder.

Fig. 7 is a drawing exemplarily illustrating a process of acquiring prediction information on the lane lines by labelling lane line data by each channel, removing noises in the labelled data and applying a moving average filter thereto.

Fig. 8 is a drawing exemplarily illustrating a process of applying the prediction information on the lane lines to the result of the semantic segmentation to determine exposed lane lines and restore unexposed lane lines, i.e., restore occluded lane lines, by referring to the exposed lane lines, thereby determining modification information on the lane lines.

The following detailed description of the present disclosure refers to the accompanying drawings, which show by way of illustration a specific embodiment in which the present disclosure may be practiced, in order to clarify the objects, technical solutions and advantages of the present disclosure. These embodiments are described in sufficient detail to enable those skilled in the art to practice the present disclosure.

Besides, in the detailed description and claims of the present disclosure, a term "include" and its variations are not intended to exclude other technical features, additions, components, or steps. Other objects, benefits and features of the present disclosure will be revealed to one skilled in the art, partially from the specification and partially from the implementation of the present disclosure. The following examples and drawings will be provided as examples, but they are not intended to limit the present disclosure.

Moreover, the present disclosure covers all possible combinations of example embodiments indicated in this specification. It is to be understood that the various embodiments of the present disclosure, although different, are not necessarily mutually exclusive. For example, a particular feature, structure, or characteristic described herein in connection with one embodiment may be implemented within other embodiments without departing from the scope of the appended claims. In addition, it is to be understood that the position or arrangement of individual elements within each disclosed embodiment may be modified without departing from the scope of the present disclosure. The following detailed description is, therefore, not to be taken in a limiting sense, and the scope of the present disclosure is defined only by the appended claims, appropriately interpreted, along with the full range of equivalents to which the claims are entitled. In the drawings, like numerals refer to the same or similar functionality throughout the several views.

To allow those skilled in the art to carry out the present disclosure easily, the example embodiments of the present disclosure will be explained by referring to attached diagrams in detail as shown below.

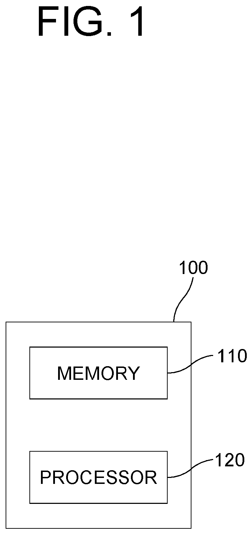

Fig. 1 is a drawing schematically illustrating a configuration of a computing device which trains a deep learning model capable of extracting road features based on multi-tasks.

By referring to Fig. 1, the computing device 100, which trains the deep learning model capable of extracting the road features based on the multi-tasks, includes at least one memory 110 and at least one processor 120.

The memory 110 of the computing device 100 stores one or more instructions which are performed by the processor 120. In detail, the instructions are codes generated to instruct the computing device 100 for providing contents to function in a specific way, and the instructions may be stored in machine-readable memories or machine-decipherable memories. The instructions can perform processes which are explained later.

Further, the processor 120 of the computing device 100 may include following hardware components: a micro processing unit, i.e., MPU, a central processing unit, i.e., CPU, a cache memory, and a data bus. Further, the computing device 100 may also include following software components: at least one operation system and at least one application on specific purposes.

Also, the computing device 100 may be interlinked with at least one database. Herein, the database may include at least one type of storage medium among following types: a flash memory type, a hard disk type, a multimedia card micro type, a card type memory (for instance, an SD memory or an XD memory), a random-access memory, i.e., RAM, a static random-access memory, i.e., SRAM, a read-only memory, i.e., ROM, an electrically erasable programmable read-only memory, i.e., EEPROM, a programmable read-only memory, i.e., PROM, a magnetic memory, a magnetic disk, an optical disk, but it is not limited thereto, such that the database also include all storage mediums capable of saving data. Also, the database may be configured in a separated place from the computing device 100. In contrary, the database may also be configured inside the computing device 100 to send data to the computing device 100 or to write received data. For convenience, the number of the database 120 may be one but two or more as the case may be.

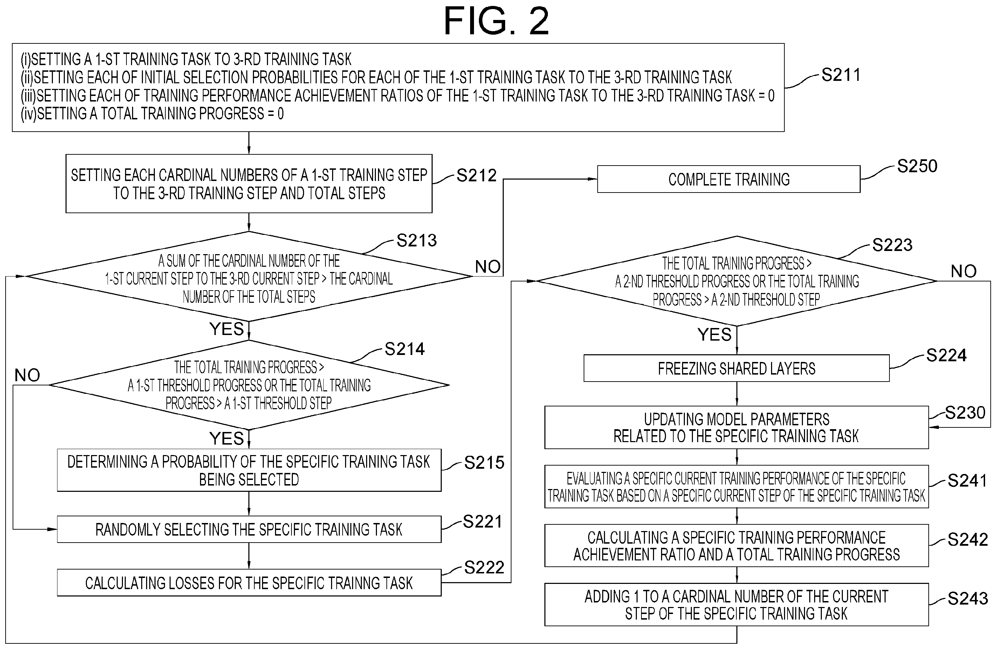

In accordance with present disclosure, a method using the computing device 100 can be explained by referring to Fig. 2.

Fig. 2 is a flow chart schematically illustrating a method for training the deep learning model capable of extracting the road features based on the multi-tasks.

First, by referring to Fig. 2, initial values to be used for a learning of the present disclosure can be set at a step S211. In detail, at the step S211, the computing device 100 may set a 1-st training task for estimating lane lines on a road, a 2-nd training task for estimating lines of structures related to the road, and a 3-rd training task for semantic segmentation of the lane lines on the road and the structures. Then, the computer device 100 may set each of initial selection probabilities for each of the 1-st training task to the 3-rd training task. Also, the computing device 100 may set each initial value of each training performance achievement ratio of each of the 1-st training task to the 3-rd training task and an initial value of a total training progress to 0. Herein, the training performance achievement ratio will be explained later at a step S215 and a step S242, and the total training progress will be explained layer at a step S242.

Then, at a step S212, the computing device 100 may set each of cardinal numbers of a 1-st training step to a 3-rd training step required to complete one epoch for each of the 1-st training task to the 3-rd training task. Next, the computing device 100 may determine a cardinal number of total steps included in an entire epoch by referring to the cardinal numbers of the 1-st training step to the 3-rd training step.

Then, at a step S213, the computing device 100 may compare the cardinal number of the total steps with a sum of the cardinal numbers of a 1-st current training step to a current 3-rd training step. If the sum is smaller than the cardinal number of the total steps, the computing device 100 may perform the process of a step S214 to be explained later, and if the sum is equal to the cardinal number of the total steps, the computing device 100 may perform a step S250 to complete the training.

Herein, since only initial values have been set as mentioned above at the step S211, the computing device 100 performs the process of the step S214.

At the step S214, in response to determining that the total training progress is smaller than or equal to a 1-st threshold progress or a 1-st threshold step, the computing device 100 may proceed to a step S221, i.e., randomly select a specific training task among the 1-st training task to the 3-rd training task by referring to each of the initial selection probabilities for each of the 1-st training task to the 3-rd training task.

Herein, a cardinal number of an n-th step for an n-th training task can be determined as {*a cardinal number of data for the n-th training task*/*a batch_size corresponding to the n-th training task*}. Herein, n is an integer among 1 to 3. Further, the cardinal number of the total steps can be determined as $\{$*a cardinal number of the epochs determined by a user* $\times \sum_{n=1}^{3}$*(the cardinal number of the n-th step for the n-th training task)*$\}$.

Then, at the step S221 again, after randomly selecting the specific training task, the computing device 100 may proceed to a step S222, i.e., calculate one or more losses for the specific training task by referring to prediction results outputted from the specific training task layer and GT (i.e., Ground Truth) corresponding to the specific training task.

At the step S214, contrary to the example above, in response to detecting that the total training progress is larger than the 1-st threshold progress or the 1-st threshold step, the computing device 100 may proceed to a step S215. That is, the computing device 100 may calculate a specific training performance achievement ratio for the specific training task by referring to a ratio of a specific current training performance on the specific training task to a specific highest training performance pre-calculated through testing a single training task. Next, the computing device 100 calculates a specific training weight by referring to the specific training performance achievement ratio, wherein the specific training weight corresponds to the specific training task. Then, the computing device 100 calculates an adjusted selection probability for the specific training task by referring to the specific training weight and the cardinal number of the specific training step. And then, the computing device 100 determines a probability of the specific training task being selected among the 1-st training task to the 3-rd training task as the adjusted selection probability. Thereafter, the computing device 100 can perform the steps of S221 and S222.

Herein, the specific training performance achievement ratio can be determined as {*the specific current training performance*/*the specific highest training performance*}, the specific training weight can be determined as {*1 - (the specific training performance achievement ratio)/(the 1-st training performance achievement ratio + the 2-nd training performance achievement ratio + the 3-rd training performance achievement ratio)*}, and the adjusted selection probability for the specific training task can be determined as {(*the specific training weight* × (*the cardinal number of the specific training step / the sum of the cardinal number of the 1-st training step to the 3-rd training step*)}.

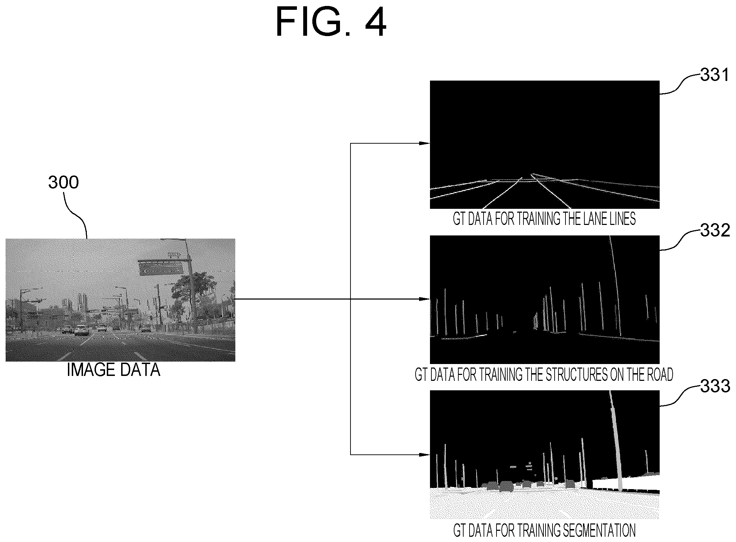

Then, at the step S222 again, the computing device 100 calculates the losses for the specific training task. For better understanding, the process of calculating the losses is explained by referring to the Figs. 3 and 4.

Fig. 3 is a drawing exemplarily illustrating a configuration for estimating the road features based on the deep learning model. In detail, Fig. 3 shows (i) a configuration for executing the 1-st training task, i.e., the task for estimating lane lines, the 2-nd training task, i.e., the task for estimating lines of structures on the road, and the 3-rd training task, i.e., the task for semantic segmentation task and (ii) a process of predicting a position and a posture of an autonomous vehicle by using HD maps and modification information acquired by matching a result of estimating the lane lines and a result of the semantic segmentation task and by matching a result of estimating the lines of the structures on the road and the result of the semantic segmentation task.

By referring to Fig. 3, image data 300 acquired from at least one camera mounted on the autonomous vehicle may be inputted to an encoding layer 310 and output data from the encoding layer 310 may be inputted to a decoding layer 320. As a result, lane line candidate data 321 corresponding to the 1-st training task for estimating the lane lines on the road, structure line candidate data 322 corresponding to the 2-nd training task for estimating the lines of the structures on the road, and semantic segmentation data 323 corresponding to the 3-rd training task for the semantic segmentation can be obtained as output data from the decoding layer 320.

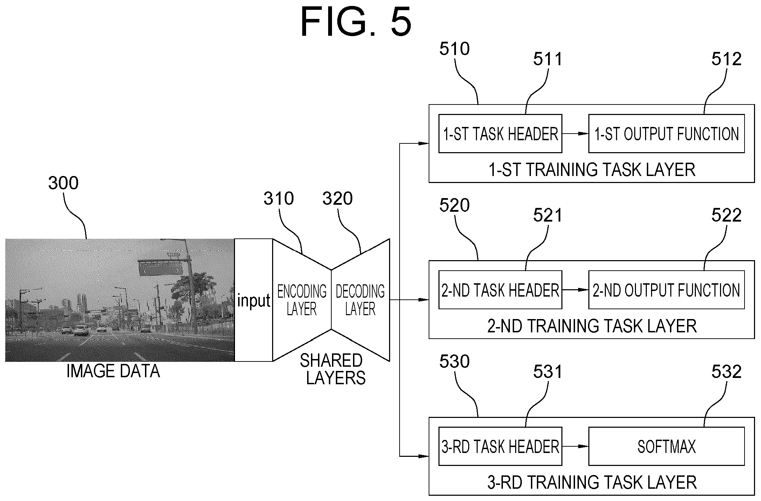

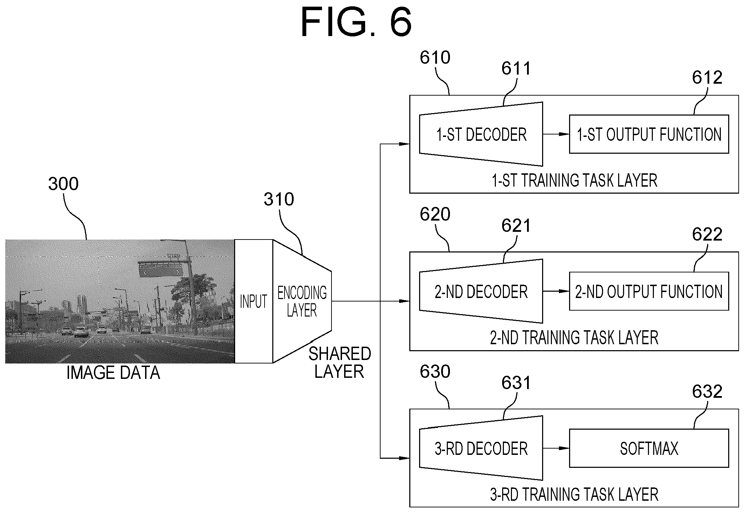

The encoding layer 310 of the deep learning model is configured to be shared among the 1-st training task to the 3-rd training task so that results of operations of the encoding layer 310 can be shared. However, the decoding layer 320 can be configured to be either shared or unshared among the 1-st training task to the 3-rd training task. More explanations thereon will be provided by referring to Figs. 5 and 6.

Also, the 1-st training task is a task of the deep learning model capable of predicting multiple of the lane lines, which are partially unexposed (i.e., occluded) or discontinuous, by connecting some parts of the lane lines. And, the 2-nd training task is a task of the deep learning model capable of predicting the lines of the vertical structures such as utility poles and supports of traffic lights and the road structures such as curbs when the aforementioned structures are partially occluded. Finally, the 3-rd training task is a task for a conventional segmentation process for the lane lines, the curbs, the traffic lights, the utility poles, vehicles, and the roads where the vehicles can drive.

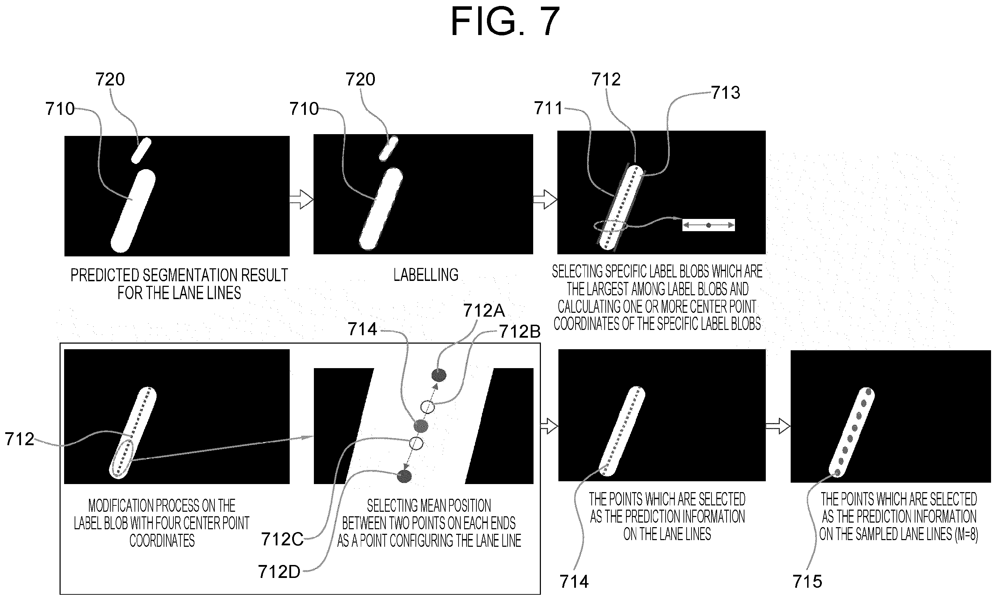

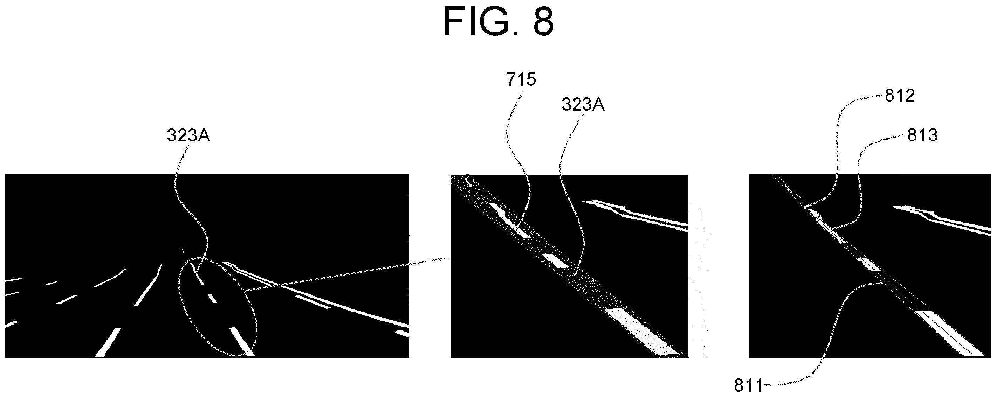

Meanwhile, a post-processing 340 in Fig. 3 will be explained layer by referring to Figs. 7 and 8.

Fig. 4 is a drawing exemplarily illustrating examples of GT data for training the lane lines, GT data for training the lines of the structures on the road, and GT data for training semantic segmentation, wherein all of the GT data correspond to image data.

In detail, GT data 331 for training the lane lines are ground truths for various lines in the image data 300, e.g., (i) one or more lane lines where indices for indicating left or right side of the autonomous vehicle such as L3, L2, L1, R1, R2, R3 ··· are assigned, (ii) stop lines, (iii) guidance lines, and (iv) lines of speed bumps. GT data 332 for training the lines of the structures on the road are ground truths for lines of the structures on the road in the image data 300 such as the utility poles, the traffic lights, the supports of traffic signs and the curbs. Finally, GT data 333 for training semantic segmentation are ground truths for the image data 300 to be shown as surface information including apparent states of the lane lines, roads where vehicles can be driven, the curbs, the traffic lights, the vehicles and the pedestrians. Each of the ground truths, i.e., the GT data 331 for training the lane lines, the GT data 332 for training the lines of the structures on the road, and the GT data 333 for training semantic segmentation, is compared with each of the estimation results of the decoding layer 320, i.e., the lane line candidate data 321 for the 1-st training task, the structure line candidate data 322 for the 2-nd training task, and the semantic segmentation data 323 for the 3-rd training task. Then, the losses can be calculated by referring to a result of a comparison explained above.

Then, at a step S223, the computing device 100 may compare the total training progress with a 2-nd threshold progress or a 2-nd threshold step. In response to determining that the total training progress is smaller than or equal to the 2-nd threshold progress or the 2-nd threshold step, the computing device 100 may perform a backpropagation process on the losses at a step 230 to update model parameters related to the specific training task.

Meanwhile, in response to determining that the total training progress is larger than the 2-nd threshold progress or the 2-nd threshold step at the step S233, on condition that the shared layers are frozen at a step S224, the computing device 100 may update one or more specific model parameters of a specific individual layer, among the individual layers, corresponding to the specific training task at the step S230.

More detailed explanations on the shared layers and the individual layers are provided as follows.

Fig. 5 is a drawing exemplarily illustrating a decoder-shared structure of the deep learning model comprised of (i) shared layers including an encoding layer and a decoding layer and (ii) individual layers including a 1-st training task layer to a 3-rd training task layer.

In detail, the decoder-shared structure of the deep learning model includes, as shared layers, (i) an encoding layer 310 where the image data 300 acquired from at least one camera mounted on the autonomous vehicle are inputted and (ii) a decoding layer 320 where encoded output data outputted from the encoding layer 310 are inputted. Further, the decoder-shared structure of the deep learning model includes, as individual layers, (i) a 1-st training task layer 510 which has a 1-st task header 511 where decoded output data outputted from the decoding layer 320 are inputted, wherein the 1-st task header 511 corresponds to the 1-st training task, and has a 1-st output function 512 for applying one or more output function operations to 1-st task header output data outputted from the 1-st task header 511, (ii) a 2-nd training task layer 520 which has a 2-nd task header 521 where the decoded output data are inputted, wherein the 2-nd task header 521 corresponds to the 2-nd training task, and has a 2-nd output function 522 for applying the output function operations to 2-nd task header output data outputted from the 2-nd task header 521, and (iii) a 3-rd training layer 530 which has a 3-rd task header 531 where the decoded output data are inputted, wherein the 3-rd task header 531 corresponds to the 3-rd training task, and has a specific Softmax function 532 for applying one or more classification operations to 3-rd task header output data outputted from the 3-rd task header 531.

Also, Fig. 6 is a drawing exemplarily illustrating a decoder-unshared structure of the deep learning model comprised of (i) a shared layer including an encoding layer and (ii) individual layers including a 1-st training task layer to a 3-rd training task layer each of which includes its corresponding decoder.

In detail, the decoder-unshared structure of the deep learning model includes, as a shared layer, an encoding layer 310 where the image data 300 acquired from at least one camera mounted on an autonomous vehicle are inputted. Further, the decoder-unshared structure of the deep learning model includes, as individual layers, (i) a 1-st training task layer 610 which has a 1-st decoder 611 where encoded output data outputted from the encoding layer 310 are inputted, wherein the 1-st decoder 611 corresponds to the 1-st training task, and has a 1-st output function 612 for applying one or more output function operations to 1-st decoded output data outputted from the 1-st decoder 611, (ii) a 2-nd training task layer 620 which has a 2-nd decoder 621 where the encoded output data are inputted, wherein the 2-nd decoder 621 corresponds to the 2-nd training task, and has a 2-nd output function 622 for applying the output function operations to 2-nd decoded output data outputted from the 2-nd decoder 621, and (iii) a 3-rd training layer 630 which has a 3-rd decoder 631 where the encoded output data are inputted, wherein the 3-rd decoder 631 corresponds to the 3-rd training task, and a specific Softmax function 632 for applying one or more classification operations to 3-rd decoded output data outputted from the 3-rd decoder 621.

Herein, each of the 1-st output functions and the 2-nd output functions for the decoder-shared structure and the decoder-unshared structure may be a sigmoid function, but it is not limited thereto.

Next, at the step S230, in response to detecting that the model parameters are updated, the computing device 100 evaluates a specific current training performance of the specific training task based on a specific current step of the specific training task at a step S241. Then, at a step S242, the computing device 100 calculates the specific training performance achievement ratio of the specific training task by referring to the ratio of the specific current training performance to the specific highest training performance of the specific training task. Thereafter, the computing device 100 calculates the total training progress by referring to the 1-st training performance achievement ratio to the 3-rd training performance achievement ratio each of which corresponds to the 1-st training task to the 3-rd training task, wherein the specific training performance achievement ratio is one of the 1-st training performance achievement ratio to the 3-rd training performance achievement ratio. Then, at a step 243, after adding 1 to a cardinal number of the specific current step, if a sum of the cardinal numbers of the 1-st current step to the 3-rd current step is smaller than the cardinal number of the total steps, the computing device 100 supports the steps after the step S213 to be repeatedly performed. For reference, the sum of the cardinal numbers of the 1-st current step to the 3-rd current step represents a summation of all steps included in all epochs accumulated up to date.

Herein, the total training progress can be calculated as {*(the 1-st training performance achievement ratio + the 2-nd training performance achievement ratio + the 3-rd training performance achievement ratio)*/3.}

Meanwhile, the explanations on the processes of training the deep learning model at the steps of from S211 to S243 are provided on the assumption that there are no integrated training data. But, if there are the integrated training data, the computing device 100 may additionally set a 4-th training task for simultaneously training the 1-st training task to the 3-rd training task and then perform processes similar to the steps of from S211 to S243. That is, except that there are four training tasks instead of three training tasks, the training of the deep learning model undergoes similar processes as explained above. Therefore, the explanations on the case of training the deep learning model with the integrated training data will be omitted.

Next, the post-processing 340 of the Fig. 3 will be explained by referring to Figs. 3, 7 and 8.

After the post-processing 340 of Fig. 3, in response to obtaining the lane line candidate data 321, the structure line candidate data 322, and the semantic segmentation data 323, the computing device 100 may extract line properties respectively from the lane line candidate data 321 and the structure line candidate data 322. Then, the computing device 100 may match modification information 341 with HD maps 350 to estimate a position and a posture of the autonomous vehicle. Herein, the modification information may be results of the post-processing 340 to obtain line information or surface information of each of the lane line candidate data 321 and the structure line candidate data 322.

Hereinafter, by referring to Figs. 7 and 8, explanations on (i) obtaining the modification information 341 through matching the result of estimating the lane lines and the result of the semantic segmentation and (ii) the post-processing 340 by matching the modification information 341 and the HD maps 350 will be provided. A post-processing by matching the result of estimating the lines of the structures on the road and the semantic segmentation is similar, and therefore the explanation on the matching the result of estimating the lines of the structures on the road and the semantic segmentation will be omitted.

First, Fig. 7 is a drawing exemplarily illustrating a process of acquiring prediction information on the lane lines by labelling lane line data by each channel, removing noises in the labelled data and applying a moving average filter thereto.

In detail, in response to inputting the lane line candidate data 321 from the deep learning model, the computing device 100 may perform labelling 710 and 720 on the lane line candidate data 321 by each channel. Next, the computing device 100 may select one or more specific label blobs 710 which are the largest among the label blobs and deleting remaining label blobs 720. Then, based on a y-axis of the images of the lane line candidate data 321, the computing device 100 may determine a minimum x-axis position 711 and a maximum x-axis position 713 each of which corresponds to each value on the y-axis. Then the computing device 100 may extract one or more center point coordinates 712 of the blobs as center points between the minimum x-axis position 711 and the maximum x-axis position 713. Finally, the computing device 100 may apply the moving average filter to the center point coordinates 712, thereby determining the prediction information on the lane lines.

Hereinafter, more comprehensive explanation on applying the moving average filter will be provided. To apply the moving average filter, four center points, 712A, 712B, 712C, and 712D, are selected among the multiple of the center point coordinates 712. Next, a point 714, which is a center of two points 712A and 712D located at each ends among the four center points 712A, 712B, 712C, and 712D, may be determined as the prediction information on the lane line. Then, by applying the moving average filter to each unit of four point pixels multiple times in a similar way as explained above, multiple of the points 714 as the prediction information on the lane line can be determined. Then, the points 714 as the prediction information on the lane line are sampled with a certain cardinal number of points 714, e.g., sampled with eight points 714. Accordingly, the sample eight points 714 can be determined as finalized prediction information on the lane line.

For reference, the example provided above is related to (i) selecting the four center points 712A to 712D among multiple of the center point coordinates 712 of the blobs, (ii) setting a point at a center of two center points 712A and 712D located at each ends among the four center points 712A, 712B, 712C, and 712D as the point 714 for the prediction information, and (iii) extracting the prediction information 715 on the lane lines, but it is not limited thereto. For example, the selected number of center points 712 of the blob may not be four.

Further, in the example above, the points 714 serving as the prediction information 715 on the lane line are sampled with eight points, but it is not limited thereto. For example, the points 714 serving as the prediction information 715 on the lane line may be sampled with M points.

Finally, the example above is related to the process of extracting point properties of the lane lines, but it is not limited thereto. That is, other objects from which the point properties are extracted may not only include the stop lines and the speed bumps which are included in the lane line candidate data 321 but also include the curbs and the utility poles which are included in the structure line candidate data 322.

Next, by referring to Fig. 8, more detailed explanation on merging the prediction information on the lane lines and the result of semantic segmentation.

Fig. 8 is a drawing exemplarily illustrating a process of applying the prediction information on the lane lines to the result of the semantic segmentation to determine exposed lane lines and restore unexposed lane lines, i.e., restore occluded lane lines, by referring to the exposed lane lines, thereby determining modification information on the lane lines.

In response to acquiring the prediction information 715 on the lane lines and the result 323A of the semantic segmentation 323 on specific lane line, the computing device 100 may classify certain overlapped part between the prediction information 715 on the lane lines and the result 323A of the semantic segmentation on the specific lane line into a left boundary line 811 and a right boundary line 813 of the specific lane line. Next, the computing device 100 may determine one or more overlapped center coordinates in between the left boundary line 811 and the right boundary line 813 as center points 812 of exposed lane lines. Then, the computing device 100 may restore one or more areas corresponding to one or more unexposed lane lines, i.e., occluded lane lines, by referring to the center points 812. Herein, the unexposed lane lines may correspond to the areas which exist in the prediction information 715 on the lane lines but do not exist in the result 323A of the semantic segmentation 323 on the specific lane line.

For instance, the center points 812 of past exposed lane lines, which were predicted before, may be determined as the center points 812 of a current exposed lane lines to thereby restore the areas corresponding to the unexposed lane lines. Accordingly, the modification information 341 on the lane lines can be acquired. Also, the user can determine whether the information related to the unexposed lane lines will be utilized or not.

Next, in response to calculating the modification information 341 on the lane lines, the computing device 100 may perform the matching processes by referring to the modification information 341 on the lane lines and the HD maps 350, thereby estimating the position and the posture of the autonomous vehicle at a step 360.

The present invention has an effect of performing the HD map matching in case that the lane lines on the road do not exist or are occluded.

The present invention has another effect of applying a model based on multi-tasks for minimizing operations related to redundancy among a 1-st training task for estimating the lane lines on the road, a 2-nd training task for estimating the lines of the structures related to the road, and a 3-rd training task for semantic segmentation on the lane lines on the road and the structures.

The present invention has still another effect of providing the method of training the multi-tasks based on heterogeneous data for minimizing costs of establishing learning data.

The present invention has still yet another effect of providing a prediction model which is robust to noises of videos and is capable of minimizing post-processes.

The suggested processes, which is in accordance with one example embodiment of the present disclosure, can be implemented in a programmed command which can be performed by various computer component, and can be written on a machine-readable medium or machine-decipherable medium. The machine-readable medium or machine-decipherable medium may include program commands, data files, data structures, or combination of aforementioned elements. The program commands written on the machine-readable medium or machine-decipherable medium may be specifically designed or complied only to perform aforementioned processes or may be allowed to use after notices to those skilled in the art of present disclosure. The machine-readable medium or machine-decipherable medium can be one of follow media: a hard disk, a magnetic medium such as a floppy disk or a magnetic tape, an optical medium such as CD-ROM and DVD, a magnetooptical medium such as a floptical disk, a ROM, a RAM, a Flash memory, and other hardware components which are designed to save and perform the program commands. The program commands may be written in one of complied languages or one of interpreted languages. The hardware device may be configured to perform the process of this disclosure as at least one or more software module, and vice versa.

As seen above, the present disclosure has been explained by specific matters such as detailed components, limited embodiments, and drawings. While the invention has been shown and described with respect to the preferred embodiments, it, however, will be understood by those skilled in the art that various changes and modification may be made without departing from the scope of the invention as defined in the following claims.

Accordingly, the thought of the present disclosure must not be confined to the explained embodiments, and the following patent claims**.**

**Claims**

1. A method for training a deep learning model capable of extracting one or more road features based on multi-tasks, comprising steps of:

   (a) a computing device (i) setting a 1-st training task for estimating lane lines on a road, a 2-nd training task for estimating lines of structures related to the road, and a 3-rd training task for semantic segmentation of the lane lines on the road and the structures, (ii) setting each of initial selection probabilities for each of the 1-st training task to the 3-rd training task, (iii) setting each of cardinal numbers of a 1-st training step to a 3-rd training step required to complete one epoch for each of the 1-st training task to the 3-rd training task, and (iv) determining a cardinal number of total steps included in an entire epoch based on the cardinal numbers of the 1-st training step to the 3-rd training step;
   (b) in response to determining that a total training progress is smaller than or equal to a 1-st threshold progress or a 1-st threshold step, the computing device (i) randomly selecting a specific training task among the 1-st training task to the 3-rd training task by referring to each of the initial selection probabilities for each of the 1-st training task to the 3-rd training task and (ii) calculating one or more losses for the specific training task; and
   (c) the computing device updating one or more model parameters related to the specific training task;

   wherein, at the step (b), in response to detecting that the total training progress is larger than the 1-st threshold progress or the 1-st threshold step, the computing device (i) calculates a specific training performance achievement ratio for a specific training task by referring to a ratio of a specific current training performance on the specific training task to a specific highest training performance, (ii) calculates a specific training weight corresponding to the specific training task by referring to the specific training performance achievement ratio, (iii) calculates an adjusted selection probability for the specific training task by referring to the specific training weight and a cardinal number of a specific training step, and (iv) determines a probability of the specific training task being selected among the 1-st training task to the 3-rd training task as the adjusted selection probability.

2. The method of claim 1, wherein, at the step (b), (i) the specific training weight is represented as a result of subtracting a ratio of the specific training weight to a sum of a 1-st training performance achievement ratio to a 3-rd training performance achievement ratio from 1 and (ii) the adjusted selection probability is represented as a result of multiplying the specific training weight by a ratio of the cardinal number of the specific training step to a sum of the cardinal numbers of the 1-st training step to the 3-rd training step.

3. The method of claim 1, wherein, the deep learning model (i) includes, as shared layers, (i-1) an encoding layer where image data acquired from at least one camera mounted on an autonomous vehicle are inputted and (i-2) a decoding layer where encoded output data outputted from the encoding layer are inputted and (ii) includes, as individual layers, (ii-1) a 1-st training task layer which has a 1-st task header where decoded output data outputted from the decoding layer are inputted, wherein the 1-st task header corresponds to the 1-st training task, and has a 1-st output function for applying one or more output function operations to 1-st task header output data outputted from the 1-st task header, (ii-2) a 2-nd training task layer which has a 2-nd task header where the decoded output data are inputted, wherein the 2-nd task header corresponds to the 2-nd training task, and has a 2-nd output function for applying the output function operations to 2-nd task header output data outputted from the 2-nd task header, and (ii-3) a 3-rd training layer which has a 3-rd task header where the decoded output data are inputted, wherein the 3-rd task header corresponds to the 3-rd training task, and has a specific Softmax function for applying one or more classification operations to 3-rd task header output data outputted from the 3-rd task header.

4. The method of claim 3, wherein, at the step (c), in response to determining that the total training progress is smaller than or equal to a 2-nd threshold progress or a 2-nd threshold step, the computing device trains the shared layers and the individual layers of the deep learning model and, in response to determining that the total training progress is larger than the 2-nd threshold progress or the 2-nd threshold step, on condition that the shared layers are frozen, the computing device updates one or more specific model parameters of a specific individual layer among the individual layers corresponding to the specific training task.

5. The method of claim 1, wherein, the deep learning model (i) includes, as a shared layer, an encoding layer where image data acquired from at least one camera mounted on an autonomous vehicle are inputted and (ii) includes, as individual layers, (ii-1) a 1-st training task layer which has a 1-st decoder where encoded output data outputted from the encoding layer are inputted, wherein the 1-st decoder corresponds to the 1-st training task, and has a 1-st output function for applying one or more output function operations to 1-st decoded output data outputted from the 1-st decoder, (ii-2) a 2-nd training task layer which has a 2-nd decoder where the encoded output data are inputted, wherein the 2-nd decoder corresponds to the 2-nd training task, and has a 2-nd output function for applying the output function operations to 2-nd decoded output data outputted from the 2-nd decoder, and (ii-3) a 3-rd training layer which has a 3-rd decoder where the encoded output data are inputted, wherein the 3-rd decoder corresponds to the 3-rd training task, and a specific Softmax function for applying one or more classification operations to 3-rd decoded output data outputted from the 3-rd decoder.

6. The method of claim 5, wherein, at the step (c), in response to determining that the total training progress is smaller than or equal to a 2-nd threshold progress or a 2-nd threshold step, the computing device trains the shared layers and the individual layers of the deep learning model and, in response to determining that the total training progress is larger than the 2-nd threshold progress or the 2-nd threshold step, on condition that the shared layers are frozen, the computing device updates one or more specific model parameters of a specific individual layer among the individual layers corresponding to the specific training task.

7. The method of claim 1, further comprising steps of:

(e) in response to inputting lane line candidate data which correspond to the 1-st training task and are outputted from the deep learning model, the computing device (i) labelling the lane line candidate data by each channel, (ii) selecting one or more specific label blobs which are the largest among label blobs and deleting remaining label blobs, (iii) calculating one or more center point coordinates of the specific label blobs, and (iv) applying a moving average filter to the center point coordinates, thereby determining prediction information on the lane lines; and
(f) the computing device performing one or more matching processes by referring to the prediction information on the lane lines and one or more HD maps, thereby estimating a position and a posture of an autonomous vehicle.

8. The method of claim 7, wherein, after the step (e), in response to acquiring the prediction information on the lane lines and information on the semantic segmentation, the computing device (i) classifies certain overlapped part between the prediction information on the lane lines and the information on the semantic segmentation into one or more left boundary lines and one or more right boundary lines of one or more specific lane lines, (ii) determines one or more overlapped center coordinates in between the left boundary lines and the right boundary lines as center points of one or more exposed lane lines, and (iii) restores one or more areas corresponding to one or more unexposed lane lines by referring to the left boundary lines and the right boundary lines of the exposed lane lines, thereby determining modification information on the lane lines; and
wherein, at the step (f), the computing device performs the matching processes by referring to the modification information on the lane lines and the HD maps, thereby estimating the position and the posture of the autonomous vehicle.

9. A method for training a deep learning model capable of extracting one or more road features based on multi-tasks, comprising steps of:

(a) a computing device (i) setting a 1-st training task for estimating lane lines on a road, a 2-nd training task for estimating lines of structures related to the road, and a 3-rd training task for semantic segmentation of the lane lines on the road and the structures, (ii) setting each of initial selection probabilities for each of the 1-st training task to the 3-rd training task, (iii) setting each of cardinal numbers of a 1-st training step to a 3-rd training step required to complete one epoch for each of the 1-st training task to the 3-rd training task, and (iv) determining a cardinal number of total steps included in an entire epoch based on the cardinal numbers of the 1-st training step to the 3-rd training step;
(b) in response to determining that a total training progress is smaller than or equal to a 1-st threshold progress or a 1-st threshold step, the computing device (i) randomly selecting a specific training task among the 1-st training task to the 3-rd training task by referring to each of the initial selection probabilities for each of the 1-st training task to the 3-rd training task and (ii) calculating one or more losses for the specific training task;
(c) the computing device updating one or more model parameters related to the specific training task; and
(d) in response to detecting that the model parameters are updated, the computing device (i) updating a specific current training performance of the specific training task based on a specific current step of the specific training task, (ii) calculating a specific training performance achievement ratio of the specific training task by referring to a ratio of the specific current training performance to a specific highest training performance of the specific training task, (iii) calculating a total training progress by referring to a 1-st training performance achievement ratio to a 3-rd training performance achievement ratio each of which corresponds to the 1-st training task to the 3-rd training task, wherein the specific training performance achievement ratio is one of the 1-st training performance achievement ratio to the 3-rd training performance achievement ratio, and (iv) after adding 1 to a cardinal number of the specific current step, if a sum of the cardinal numbers of the 1-st current step to the 3-rd current step is smaller than the cardinal number of the total steps, supporting the steps of (b), (c) and (d) to be repeatedly performed.

10. A method for training a deep learning model capable of extracting one or more road features based on multi-tasks, comprising steps of:

(a) a computing device (i) setting a 1-st training task for estimating lane lines on a road, a 2-nd training task for estimating lines of structures related to the road, and a 3-rd training task for semantic segmentation of the lane lines on the road and the structures, (ii) setting each of initial selection probabilities for each of the 1-st training task to the 3-rd training task, (iii) setting each of cardinal numbers of a 1-st training step to a 3-rd training step required to complete one epoch for each of the 1-st training task to the 3-rd training task, and (iv) determining a cardinal number of total steps included in an entire epoch based on the cardinal numbers of the 1-st training step to the 3-rd training step;
(b) in response to determining that a total training progress is smaller than or equal to a 1-st threshold progress or a 1-st threshold step, the computing device (i) randomly selecting a specific training task among the 1-st training task to the 3-rd training task by referring to each of the initial selection probabilities for each of the 1-st training task to the 3-rd training task and (ii) calculating one or more losses for the specific training task;
(c) the computing device updating one or more model parameters related to the specific training task;

wherein, at the step (a), the computing device (i) additionally sets a 4-th training task for simultaneously training the 1-st training task to the 3-rd training task, (ii) additionally sets an initial selection probability for the 4-th training task, (iii) additionally sets a cardinal number of a 4-th training step required to complete one epoch for the 4-th training task, and (iv) determines the cardinal number of the total steps included in the entire epoch based on the cardinal numbers of the 1-st training step to the 4-th training step; and

wherein, at the step (b), in response to determining that the total training progress is smaller than or equal to the 1-st threshold progress or the 1-st threshold step, the computing device (i) randomly selects the specific training task among the 1-st training task to the 4-th training task by referring to each of the initial selection probabilities for each of the 1-st training task to the 4-th training task and (ii) calculates the losses for the specific training task; and

(g) in response to detecting that the model parameters are updated, the computing device (i) evaluating a specific current training performance of the specific training task based on a specific current step of the specific training task, (ii) calculating a specific training performance achievement ratio of the specific training task by referring to a ratio of the specific current training performance to a specific highest training performance of the specific training task, (iii) calculating a total training progress by referring to a 1-st training performance achievement ratio to a 4-th training performance achievement ratio each of which corresponds to the 1-st training task to the 4-th training task, wherein the specific training performance achievement ratio is one of the 1-st training performance achievement ratio to the 4-th training performance achievement ratio, and (iv) after adding 1 to a cardinal number of the specific current step, if a sum of the cardinal numbers of the 1-st current step to the 4-th current step is smaller than the cardinal number of the total steps, supporting the steps of (b), (c) and (g) to be repeatedly performed.

11. A computing device for training a deep learning model capable of extracting one or more road features based on multi-tasks, comprising:

at least one memory which saves instructions; and
at least one processor configured to execute the instructions to perform processes of: (I) (i) setting a 1-st training task for estimating lane lines on a road, a 2-nd training task for estimating lines of structures related to the road, and a 3-rd training task for semantic segmentation of the lane lines on the road and the structures, (ii) setting each of initial selection probabilities for each of the 1-st training task to the 3-rd training task, (iii) setting each of cardinal numbers of a 1-st training step to a 3-rd training step required to complete one epoch for each of the 1-st training task to the 3-rd training task, and (iv) determining a cardinal number of total steps included in an entire epoch based on the cardinal numbers of the 1-st training step to the 3-rd training step; (II) in response to determining that a total training progress is smaller than or equal to a 1-st threshold progress or a 1-st threshold step, (i) randomly selecting a specific training task among the 1-st training task to the 3-rd training task by referring to each of the initial selection probabilities for each of the 1-st training task to the 3-rd training task and (ii) calculating one or more losses for the specific training task; and (III) updating one or more model parameters related to the specific training task;

wherein, at the process (II), in response to detecting that the total training progress is larger than the 1-st threshold progress or the 1-st threshold step, the processor (i) calculates a specific training performance achievement ratio for a specific training task by referring to a ratio of a specific current training performance on the specific training task to a specific highest training performance, (ii) calculates a specific training weight corresponding to the specific training task by referring to the specific training performance achievement ratio, (iii) calculates an adjusted selection probability for the specific training task by referring to the specific training weight and a cardinal number of a specific training step, and (iv) determines a probability of the specific training task being selected among the 1-st training task to the 3-rd training task as the adjusted selection probability.

12. The computing device of claim 11, wherein, at the process (II), (i) the specific training weight is represented as a result of subtracting a ratio of the specific training weight to a sum of a 1-st training performance achievement ratio to a 3-rd training performance achievement ratio from 1 and (ii) the adjusted selection probability is represented as a result of multiplying the specific training weight by a ratio of the cardinal number of the specific training step to a sum of the cardinal numbers of the 1-st training step to the 3-rd training step.

**Patentansprüche**

1. Verfahren zum Trainieren eines Tiefenlernmodells zur Extraktion eines oder mehrerer Strassenmerkmale auf der Basis von Multitasks, umfassend die folgenden Schritte:

    (a) eine Computervorrichtung, die (i) eine erste Trainingsaufgabe zum Schätzen von Fahrbahnlinien auf einer Strasse, eine zweite Trainingsaufgabe zum Schätzen von strassenbezogenen Strukturlinien und eine dritte Trainingsaufgabe zur semantischen Segmentierung der Fahrbahnlinien auf der Strasse und der Strukturen einstellt, (ii) jede der anfänglichen Auswahlwahrscheinlichkeiten für jede der ersten Trainingsaufgabe bis zur dritten Trainingsaufgabe einstellt, (iii) jede der Kardinalzahlen eines ersten Trainingsschrittes bis zu einem dritten Trainingsschritt einstellt, der erforderlich ist, um einen Zeitabschnitt für jede der ersten Trainingsaufgabe bis zur dritten Trainingsaufgabe abzuschließen, und (iv) eine Kardinalzahl der Gesamtschritte bestimmt, die in einem gesamten Zeitabschnitt beinhaltet sind, auf der Basis von den Kardinalzahlen des ersten Trainingsschrittes bis zum dritten Trainingsschritt;
    (b) als Reaktion auf das Bestimmen, dass ein Gesamttrainingsfortschritt kleiner oder gleich einem ersten Schwellenfortschritt oder einem ersten Schwellenschritt ist, die Computervorrichtung (i) eine spezifische Trainingsaufgabe unter der ersten Trainingsaufgabe bis zur dritten Trainingsaufgabe durch Bezugnahme auf jede der anfänglichen Auswahlwahrscheinlichkeiten für jede der ersten Trainingsaufgabe bis zur dritten Trainingsaufgabe zufällig auswählt und (ii) einen oder mehrere Verluste für die spezifische Trainingsaufgabe berechnet; und
    (c) die Computervorrichtung einen oder mehrere Modellparameter aktualisiert, die sich auf die spezifische Trainingsaufgabe beziehen;

    wobei, im Schritt (b), als Reaktion auf das Erkennen, dass der Gesamttrainingsfortschritt größer als der erste Schwellenfortschritt oder der erste Schwellenschritt ist, die Computervorrichtung (i) ein spezifisches Trainingsleistungs-Erfolgsverhältnis für eine spezifische Trainingsaufgabe durch Bezugnahme auf ein Verhältnis einer spezifischen aktuellen Trainingsleistung bei der spezifischen Trainingsaufgabe zu einer spezifischen höchsten Trainingsleistung berechnet, (ii) ein spezifisches Trainingsgewicht berechnet, das der spezifischen Trainingsaufgabe durch Bezugnahme auf das spezifische Trainingsleistungs-Erfolgsverhältnis entspricht, (iii) eine angepasste Auswahlwahrscheinlichkeit für die spezifische Trainingsaufgabe durch Bezugnahme auf das spezifische Trainingsgewicht und eine Kardinalzahl eines spezifischen Trainingsschritts berechnet und (iv) eine Wahrscheinlichkeit der spezifischen Trainingsaufgabe bestimmt, die unter der ersten Trainingsaufgabe bis zur dritten Trainingsaufgabe als die angepasste Auswahlwahrscheinlichkeit ausgewählt wird.

2. Verfahren nach Anspruch 1, wobei, im Schritt (b), (i) das spezifische Trainingsgewicht infolge des Subtrahierens eines Verhältnisses des spezifischen Trainingsgewichts zu einer Summe eines ersten Trainingsleistungs-Erfolgsverhältnisses zu einem dritten Trainingsleistungs-Erfolgsverhältnis von 1 dargestellt wird und (ii) die angepasste Auswahlwahrscheinlichkeit infolge des Multiplizierens des spezifischen Trainingsgewichts mit einem Verhältnis der Kardinalzahl des spezifischen Trainingsschritts zu einer Summe der Kardinalzahlen des ersten Trainingsschritts zu dem dritten Trainingsschritt dargestellt wird.

3. Verfahren nach Anspruch 1, wobei das Tiefenlernmodell (i) als gemeinsame Schichten (i-1) eine Kodierungsschicht beinhaltet, in die Bilddaten, die von mindestens einer Kamera erfasst wurden, die an einem autonomen Fahrzeug montiert ist, eingegeben werden, und (i-2) eine Dekodierungsschicht beinhaltet, in die kodierte Ausgabedaten eingegeben werden, die von der Kodierungsschicht ausgegeben werden, und (ii) als einzelne Schichten (ii-1) eine erste Trainingsaufgabenschicht beinhaltet, die einen ersten Aufgaben-Header aufweist, in den dekodierte Ausgabedaten eingegeben werden, die von der Dekodierschicht ausgegeben werden, wobei der erste Aufgaben-Header der ersten Trainingsaufgabe entspricht und eine erste Ausgabefunktion zum Anwenden einer oder mehrerer Ausgabefunktionsoperationen auf erste Aufgaben-Header-Ausgabedaten aufweist, die von dem ersten Aufgaben-Header ausgegeben werden, (ii-2) eine zweite Trainingsaufgabenschicht beinhaltet, die einen zweiten Aufgaben-Header aufweist, in den die dekodierten Ausgabedaten eingegeben werden, wobei der zweite Aufgaben-Header der zweiten Trainingsaufgabe entspricht und eine zweite Ausgabefunktion zum Anwenden der Ausgabefunktionsoperationen auf die zweiten Aufgaben-Header-Ausgabedaten aufweist, die von dem zweiten Aufgaben-Header ausgegeben werden, und (ii-3) eine dritte Trainingsschicht beinhaltet, die einen dritten Aufgaben-Header aufweist, in den die dekodierten Ausgabedaten eingegeben werden, wobei der dritte Aufgaben-Header der dritten Trainingsaufgabe entspricht und eine spezifische Softmax-Funktion zum Anwenden einer oder mehrerer Klassifizierungsoperationen auf die dritten Aufgaben-Header-Ausgabedaten aufweist, die von dem dritten Aufgaben-Header ausgegeben werden.

4.  Verfahren nach Anspruch 3, wobei, im Schritt (c), als Reaktion auf das Bestimmen, dass der Gesamttrainingsfortschritt kleiner oder gleich einem zweiten Schwellenfortschritt oder einem zweiten Schwellenschritt ist, die Computervorrichtung die gemeinsamen Schichten und die individuellen Schichten des Tiefenlernmodells trainiert und, als Reaktion auf das Bestimmen, dass der Gesamttrainingsfortschritt größer als der zweite Schwellenfortschritt oder der zweite Schwellenschritt ist, unter der Bedingung, dass die gemeinsamen Schichten festgelegt sind, die Computervorrichtung einen oder mehrere spezifische Modellparameter einer spezifischen individuellen Schicht unter den individuellen Schichten entsprechend der spezifischen Trainingsaufgabe aktualisiert.

5.  Verfahren nach Anspruch 1, wobei das Tiefenlernmodell (i), als eine gemeinsame Schicht, eine Kodierungsschicht beinhaltet, in die Bilddaten, die von mindestens einer Kamera erfasst wurden, die an einem autonomen Fahrzeug montiert ist, eingegeben werden, und (ii) als einzelne Schichten (ii-1) eine erste Trainingsaufgabenschicht beinhaltet, die einen ersten Dekoder aufweist, in den kodierte Ausgabedaten eingegeben werden, die von der Kodierungsschicht ausgegeben werden, wobei der erste Dekoder der ersten Trainingsaufgabe entspricht und eine erste Ausgabefunktion zum Anwenden einer oder mehrerer Ausgabefunktionsoperationen auf ersten dekodierten Ausgabedaten aufweist, die von dem ersten Dekoder ausgegeben werden, (ii-2) eine zweite Trainingsaufgabenschicht beinhaltet, die einen zweiten Dekoder aufweist, in den die kodierten Ausgabedaten eingegeben werden, wobei der zweite Dekoder der zweiten Trainingsaufgabe entspricht und eine zweite Ausgabefunktion zum Anwenden der Ausgabefunktionsoperationen auf zweite dekodierte Ausgabedaten aufweist, die von dem zweiten Dekoder ausgegeben werden, und (ii-3) eine dritte Trainingsschicht beinhaltet, die einen dritten Dekoder aufweist, in den die kodierten Ausgabedaten eingegeben werden, wobei der dritte Dekoder der dritten Trainingsaufgabe entspricht und eine spezifische Softmax-Funktion zum Anwenden einer oder mehrerer Klassifizierungsoperationen auf die dritten dekodierten Ausgabedaten aufweist, die von dem dritten Dekoder ausgegeben werden.

6.  Verfahren nach Anspruch 5, wobei, im Schritt (c), als Reaktion auf das Bestimmen, dass der Gesamttrainingsfortschritt kleiner oder gleich einem zweiten Schwellenfortschritt oder einem zweiten Schwellenschritt ist, die Computervorrichtung die gemeinsamen Schichten und die individuellen Schichten des Tiefenlernmodells trainiert und, als Reaktion auf das Bestimmen, dass der Gesamttrainingsfortschritt größer als der zweite Schwellenfortschritt oder der zweite Schwellenschritt ist, unter der Bedingung, dass die gemeinsamen Schichten festgelegt sind, die Computervorrichtung einen oder mehrere spezifische Modellparameter einer spezifischen individuellen Schicht unter den individuellen Schichten entsprechend der spezifischen Trainingsaufgabe aktualisiert.

7.  Verfahren nach Anspruch 1, ferner umfassend die folgenden Schritte:

    (e) als Reaktion auf das Eingeben von Fahrbahnlinien-Kandidatendaten, die der ersten Trainingsaufgabe entsprechen und von dem Tiefenlernmodell ausgegeben werden, die Computervorrichtung (i) die Fahrbahnlinien-Kandidatendaten durch jeden Kanal kennzeichnet, (ii) einen oder mehrere spezifische Label-Bereiche auswählt, die die größten unter den Label-Bereichen sind, und die verbleibenden Label-Bereiche löscht, (iii) eine oder mehrere Mittelpunktskoordinaten der spezifischen Label-Bereiche berechnet und (iv) einen Filter für den gleitenden Durchschnitt auf die Mittelpunktskoordinaten anwendet, wodurch Vorhersageinformationen über die Fahrbahnlinien bestimmt werden; und
    (f) die Computervorrichtung einen oder mehrere Abgleichprozesse durch Bezugnahme auf die Vorhersageinformationen über die Fahrbahnlinien und eine oder mehrere HD-Karten durchführt, wodurch eine Position und eine Haltung eines autonomen Fahrzeugs geschätzt wird.

8.  Verfahren nach Anspruch 7, wobei, nach dem Schritt (e), als Reaktion auf das Erfassen der Vorhersageinformationen über die Fahrbahnlinien und der Informationen über die semantische Segmentierung, die Computervorrichtung (i) bestimmte überlappende Teile zwischen den Vorhersageinformationen über die Fahrbahnlinien und den Informationen über die semantische Segmentierung in eine oder mehrere linke Begrenzungslinien und eine oder mehrere rechte Begrenzungslinien einer oder mehrerer spezifischer Fahrbahnlinien klassifiziert, (ii) eine oder mehrere überlappende Mittelkoordinaten zwischen den linken Begrenzungslinien und den rechten Begrenzungslinien als Mittelpunkte einer oder mehrerer freigelegter Fahrbahnlinien bestimmt und (iii) einen oder mehrere Bereiche, die einer oder mehreren nicht freigelegten Fahrbahnlinien entsprechen, durch Bezugnahme auf die linken Begrenzungslinien und die rechten Begrenzungslinien der freigelegten Fahrbahnlinien wieder herstellt, wodurch Änderungsinformationen über die Fahrbahnlinien bestimmt werden; und
    wobei, im Schritt (f), die Computervorrichtung die Abgleichprozesse durch Bezugnahme auf die Änderungsinformationen zu den Fahrbahnlinien und die HD-Karten durchführt, wodurch die Position und die Haltung des autonomen Fahrzeugs geschätzt wird.

9. Verfahren zum Trainieren eines Tiefenlernmodells zur Extraktion eines oder mehrerer Strassenmerkmale auf der Basis von Multitasks, umfassend die folgenden Schritte:

(a) eine Computervorrichtung, die (i) eine erste Trainingsaufgabe zum Schätzen von Fahrbahnlinien auf einer Strasse, eine zweite Trainingsaufgabe zum Schätzen von strassenbezogenen Strukturlinien und eine dritte Trainingsaufgabe zur semantischen Segmentierung der Fahrbahnlinien auf der Strasse und der Strukturen einstellt, (ii) jede der anfänglichen Auswahlwahrscheinlichkeiten für jede der ersten Trainingsaufgabe bis zur dritten Trainingsaufgabe einstellt, (iii) jede der Kardinalzahlen eines ersten Trainingsschrittes bis zu einem dritten Trainingsschritt einstellt, der erforderlich ist, um einen Zeitabschnitt für jede der ersten Trainingsaufgabe bis zur dritten Trainingsaufgabe abzuschließen, und (iv) eine Kardinalzahl der Gesamtschritte bestimmt, die in einem gesamten Zeitabschnitt beinhaltet sind, auf der Basis von den Kardinalzahlen des ersten Trainingsschrittes bis zum dritten Trainingsschritt;

(b) als Reaktion auf das Bestimmen, dass ein Gesamttrainingsfortschritt kleiner oder gleich einem ersten Schwellenfortschritt oder einem ersten Schwellenschritt ist, die Computervorrichtung (i) eine spezifische Trainingsaufgabe unter der ersten Trainingsaufgabe bis zur dritten Trainingsaufgabe durch Bezugnahme auf jede der anfänglichen Auswahlwahrscheinlichkeiten für jede der ersten Trainingsaufgabe bis zur zweiten Trainingsaufgabe zufällig auswählt und (ii) einen oder mehrere Verluste für die spezifische Trainingsaufgabe berechnet; und

(c) die Computervorrichtung einen oder mehrere Modellparameter aktualisiert, die sich auf die spezifische Trainingsaufgabe beziehen; und

(d) als Reaktion auf das Erkennen, dass die Modellparameter aktualisiert werden, die Computervorrichtung (i) eine spezifische aktuelle Trainingsleistung der spezifischen Trainingsaufgabe auf der Basis von einem spezifischen aktuellen Schritt der spezifischen Trainingsaufgabe aktualisiert, (ii) ein spezifisches Trainingsleistungs-Erfolgsverhältnis der spezifischen Trainingsaufgabe durch Bezugnahme auf ein Verhältnis der spezifischen aktuellen Trainingsleistung zu einer spezifischen höchsten Trainingsleistung der spezifischen Trainingsaufgabe berechnet, (iii) einen Gesamttrainingsfortschritt durch Bezugnahme auf ein erstes Trainingsleistungs-Erfolgsverhältnis bis zu einem dritten Trainingsleistungs-Erfolgsverhältnis berechnet, von denen jede der ersten Trainingsaufgabe bis zur dritten Trainingsaufgabe entspricht, wobei das spezifische Trainingsleistungs-Erfolgsverhältnis eines des ersten Trainingsleistungs-Erfolgsverhältnisses bis zum dritten Trainingsleistungs-Erfolgsverhältnis ist, und (iv) nach dem Addieren von 1 zu einer Kardinalzahl des spezifischen aktuellen Schritts, wenn eine Summe der Kardinalzahlen des ersten aktuellen Schritts bis zum dritten aktuellen Schritt kleiner als die Kardinalzahl der Gesamtschritte ist, die Schritte von (b), (c) und (d) unterstützt, um wiederholt durchgeführt zu werden.

10. Verfahren zum Trainieren eines Tiefenlernmodells zur Extraktion eines oder mehrerer Strassenmerkmale auf der Basis von Multitasks, umfassend die folgenden Schritte:

(a) eine Computervorrichtung, die (i) eine erste Trainingsaufgabe zum Schätzen von Fahrbahnlinien auf einer Strasse, eine zweite Trainingsaufgabe zum Schätzen von strassenbezogenen Strukturlinien und eine dritte Trainingsaufgabe zur semantischen Segmentierung der Fahrbahnlinien auf der Strasse und der Strukturen einstellt, (ii) jede der anfänglichen Auswahlwahrscheinlichkeiten für jede der ersten Trainingsaufgabe bis zur dritten Trainingsaufgabe einstellt, (iii) jede der Kardinalzahlen eines ersten Trainingsschrittes bis zu einem dritten Trainingsschritt einstellt, der erforderlich ist, um einen Zeitabschnitt für jede der ersten Trainingsaufgabe bis zur dritten Trainingsaufgabe abzuschließen, und (iv) eine Kardinalzahl der Gesamtschritte bestimmt, die in einem gesamten Zeitabschnitt beinhaltet sind, auf der Basis von den Kardinalzahlen des ersten Trainingsschrittes bis zum dritten Trainingsschritt;

(b) als Reaktion auf das Bestimmen, dass ein Gesamttrainingsfortschritt kleiner oder gleich einem ersten Schwellenfortschritt oder einem ersten Schwellenschritt ist, die Computervorrichtung (i) eine spezifische Trainingsaufgabe unter der ersten Trainingsaufgabe bis zur dritten Trainingsaufgabe durch Bezugnahme auf jede der anfänglichen Auswahlwahrscheinlichkeiten für jede der ersten Trainingsaufgabe bis zur dritten Trainingsaufgabe zufällig auswählt und (ii) einen oder mehrere Verluste für die spezifische Trainingsaufgabe berechnet;

(c) die Computervorrichtung einen oder mehrere Modellparameter aktualisiert, die sich auf die spezifische Trainingsaufgabe beziehen;

wobei, im Schritt (a), die Computervorrichtung (i) zusätzlich eine vierte Trainingsaufgabe zum gleichzeitigen Trainieren der ersten Trainingsaufgabe bis zur dritten Trainingsaufgabe einstellt, (ii) zusätzlich eine anfängliche Auswahlwahrscheinlichkeit für die vierte Trainingsaufgabe einstellt, (iii) zusätzlich eine Kardinalzahl eines vierten Trainingsschritts einstellt, der erforderlich ist, um einen Zeitabschnitt für die vierte Trainingsaufgabe abzuschließen, und (iv) die Kardinalzahl der Gesamtschritte bestimmt, die in dem gesamten Zeitabschnitt beinhaltet sind, auf der Basis von den Kardinalzahlen des ersten Trainingsschritts bis zum vierten Trainingsschritt; und

wobei, im Schritt (b), als Reaktion auf das Bestimmen, dass der Gesamttrainingsfortschritt kleiner oder gleich dem ersten Schwellenfortschritt oder dem ersten Schwellenschritt ist, die Computervorrichtung (i) die spezifische Trainingsaufgabe unter der ersten Trainingsaufgabe bis zur vierten Trainingsaufgabe durch Bezugnahme auf jede der anfänglichen Auswahlwahrscheinlichkeiten für jede der ersten Trainingsaufgabe bis zur vierten Trainingsaufgabe zufällig auswählt und (ii) die Verluste für die spezifische Trainingsaufgabe berechnet; und

(g) als Reaktion auf das Erkennen, dass die Modellparameter aktualisiert werden, die Computervorrichtung (i) eine spezifische aktuelle Trainingsleistung der spezifischen Trainingsaufgabe auf der Basis von einem spezifischen aktuellen Schritt der spezifischen Trainingsaufgabe bewertet, (ii) ein spezifisches Trainingsleistungs-Erfolgsverhältnis der spezifischen Trainingsaufgabe durch Bezugnahme auf ein Verhältnis der spezifischen aktuellen Trainingsleistung zu einer spezifischen höchsten Trainingsleistung der spezifischen Trainingsaufgabe berechnet, (iii) einen Gesamttrainingsfortschritt durch Bezugnahme auf ein erstes Trainingsleistungs-Erfolgsverhältnis bis zu einem vierten Trainingsleistungs-Erfolgsverhältnis berechnet, von denen jede der ersten Trainingsaufgabe bis zur vierten Trainingsaufgabe entspricht, wobei das spezifische Trainingsleistungs-Erfolgsverhältnis eines des ersten Trainingsleistungs-Erfolgsverhältnisses bis zum vierten Trainingsleistungs-Erfolgsverhältnis ist, und (iv) nach dem Addieren von 1 zu einer Kardinalzahl des spezifischen aktuellen Schritts, wenn eine Summe der Kardinalzahlen des ersten aktuellen Schritts bis zum vierten aktuellen Schritt kleiner als die Kardinalzahl der Gesamtschritte ist, die Schritte von (b), (c) und (g) unterstützt, um wiederholt durchgeführt zu werden.

11. Computervorrichtung zum Trainieren eines Tiefenlernmodells zur Extraktion eines oder mehrerer Strassenmerkmale auf der Basis von Multitasks, umfassend:

mindestens einen Speicher, der Befehle speichert; und
mindestens einen Prozessor, der so konfiguriert ist, dass er die Befehle ausführt, um die folgenden Prozesse durchzuführen: (I) (i) Einstellen einer ersten Trainingsaufgabe zum Schätzen von Fahrbahnlinien auf einer Strasse, einer zweiten Trainingsaufgabe zum Schätzen von strassenbezogenen Strukturlinienen und einer dritten Trainingsaufgabe zur semantischen Segmentierung der Fahrbahnlinien auf der Strasse und der Strukturen, (ii) Einstellen jeder der anfänglichen Auswahlwahrscheinlichkeiten für jede der ersten Trainingsaufgabe bis zur dritten Trainingsaufgabe, (iii) Einstellen jeder der Kardinalzahlen eines ersten Trainingsschrittes bis zum dritten Trainingsschritt, der erforderlich ist, um einen Zeitabschnitt für jede der ersten Trainingsaufgabe bis zur dritten Trainingsaufgabe abzuschließen, und (iv) Bestimmen einer Kardinalzahl der Gesamtschritte, die in einem gesamten Zeitabschnitt beinhaltet sind, auf der Basis von den Kardinalzahlen des ersten Trainingsschrittes bis zum dritten Trainingsschritt; (II) als Reaktion auf das Bestimmen, dass ein Gesamttrainingsfortschritt kleiner oder gleich einem ersten Schwellenfortschritt oder einem ersten Schwellenschritt ist, (i) zufälliges Auswählen einer spezifischen Trainingsaufgabe unter der ersten Trainingsaufgabe bis zur dritten Trainingsaufgabe durch Bezugnahme auf jede der anfänglichen Auswahlwahrscheinlichkeiten für jede der ersten Trainingsaufgabe bis zur dritten Trainingsaufgabe und (ii) Berechnen eines oder mehrerer Verluste für die spezifische Trainingsaufgabe; und (III) Aktualisieren eines oder mehrerer Modellparameter, die sich auf die spezifische Trainingsaufgabe beziehen;
wobei, im Prozess (II), als Reaktion auf das Erkennen, dass der Gesamttrainingsfortschritt größer als der erste Schwellenfortschritt oder der erste Schwellenschritt ist, der Prozessor (i) ein spezifisches Trainingsleistungs-Erfolgsverhältnis für eine spezifische Trainingsaufgabe durch Bezugnahme auf ein Verhältnis einer spezifischen aktuellen Trainingsleistung bei der spezifischen Trainingsaufgabe zu einer spezifischen höchsten Trainingsleistung berechnet, (ii) ein spezifisches Trainingsgewicht berechnet, das der spezifischen Trainingsaufgabe durch Bezugnahme auf das spezifische Trainingsleistungs-Erfolgsverhältnis entspricht, (iii) eine angepasste Auswahlwahrscheinlichkeit für die spezifische Trainingsaufgabe durch Bezugnahme auf das spezifische Trainingsgewicht und eine Kardinalzahl eines spezifischen Trainingsschritts berechnet, und (iv) eine Wahrscheinlichkeit bestimmt, mit der die spezifische Trainingsaufgabe unter der ersten Trainingsaufgabe bis zur dritten Trainingsaufgabe als angepasste Auswahlwahrscheinlichkeit ausgewählt wird.

12. Computervorrichtung nach Anspruch 11, wobei, im Prozess (II), (i) das spezifische Trainingsgewicht infolge des Subtrahierens eines Verhältnisses des spezifischen Trainingsgewichts zu einer Summe eines ersten Trainingsleistungs-Erfolgsverhältnisses zu einem dritten Trainingsleistungs-Erfolgsverhältnis von 1 dargestellt wird, und (ii) die angepasste Auswahlwahrscheinlichkeit infolge des Multiplizierens des spezifischen Trainingsgewichts mit einem Verhältnis der Kardinalzahl des spezifischen Trainingsschritts zu einer Summe der Kardinalzahlen des ersten Trainingsschritts zu dem dritten Trainingsschritt dargestellt wird.

## Revendications

1. Procédé d'entraînement d'un modèle d'apprentissage profond capable d'extraire une ou plusieurs caractéristiques routières sur la base de tâches multiples, comprenant les étapes suivantes :

   (a) un dispositif informatique (i) définissant une première tâche d'entraînement pour l'estimation des lignes de voie sur une route, une deuxième tâche d'entraînement pour l'estimation des lignes des structures liées à la route et une troisième tâche d'entraînement pour la segmentation sémantique des lignes de voie sur la route et des structures, (ii) la définition de chacune des probabilités de sélection initiales pour chacune de la première tâche d'entraînement à la troisième tâche d'entraînement, (iii) la définition de chacun des nombres cardinaux d'une première étape d'entraînement à une troisième étape d'entraînement nécessaire pour effectuer une époque complète pour chacune de la première tâche d'entraînement à la troisième tâche d'entraînement et (iv) la détermination d'un nombre cardinal d'étapes totales incluses dans une époque complète sur la base des nombres cardinaux de la première étape d'entraînement à la troisième étape d'entraînement ;
   (b) en réponse à la détermination qu'une progression totale d'entraînement est inférieure ou égale à une première progression de seuil ou à une première étape de seuil, le dispositif informatique : (i) sélectionne aléatoirement une tâche d'entraînement spécifique parmi la première tâche d'entraînement à la troisième tâche d'entraînement en se référant à chacune des probabilités de sélection initiales pour chacune de la première tâche d'entraînement à la troisième tâche d'entraînement; et (ii) calcule une ou plusieurs pertes pour la tâche d'entraînement spécifique ;
   c) le dispositif informatique met à jour un ou plusieurs paramètres de modèle liés à la tâche d'entraînement spécifique ;

   dans lequel, à l'étape (b), en réponse à la détection que la progression totale d'entraînement est supérieure à la première progression de seuil ou à la première étape de seuil, le dispositif informatique (i) calcule un ratio de réussite de performance d'entraînement spécifique pour une tâche d'entraînement spécifique en se référant à un ratio entre une performance d'entraînement actuelle spécifique sur la tâche d'entraînement spécifique et une performance d'entraînement maximale spécifique, (ii) calcule une pondération d'entraînement spécifique correspondant à la tâche d'entraînement spécifique en se référant au ratio de réussite de performance d'entraînement spécifique, (iii) calcule une probabilité de sélection ajustée pour la tâche d'entraînement spécifique en se référant à la pondération d'entraînement spécifique et à un nombre cardinal d'étape d'entraînement spécifique et (iv) détermine une probabilité que la tâche d'entraînement spécifique soit sélectionnée parmi la première tâche d'entraînement à la troisième tâche d'entraînement comme probabilité de sélection ajustée.

2. Procédé selon la revendication 1, dans lequel, à l'étape (b), (i) la pondération d'entraînement spécifique est représentée comme un résultat de la soustraction de 1 d'un rapport entre la pondération d'entraînement spécifique et une somme d'un premier ratio de réussite de performance d'entraînement à un troisième ratio de réussite de performance d'entraînement et (ii) la probabilité de sélection ajustée est représentée comme un résultat de la multiplication de la pondération d'entraînement spécifique par un rapport entre le nombre cardinal de l'étape d'entraînement spécifique et une somme des nombres cardinaux de la première étape d'entraînement à la troisième étape d'entraînement.

3. Procédé selon la revendication 1, dans lequel le modèle d'apprentissage profond (i) comprend, en tant que couches partagées (i-1) une couche d'encodage où sont entrées les données d'image acquises à partir d'au moins une caméra montée sur un véhicule autonome et (i-2) une couche de décodage où sont entrées les données de sortie encodées provenant de la couche d'encodage et (ii) comprend, en tant que couches individuelles : (ii-1) une première couche de tâche d'entraînement dotée d'un premier en-tête de tâche où sont entrées les données de sortie décodées provenant de la couche de décodage, dans lequel le premier en-tête de tâche correspond à la première tâche d'entraînement et possède une première fonction de sortie pour appliquer une ou plusieurs opérations de fonction de sortie aux données de sortie du premier en-tête de tâche sorties du premier de en-tête de tâche, (ii-2) une deuxième couche de tâche d'entraînement dotée d'un deuxième en-tête de tâche où sont entrées les données de sortie décodées, dans lequel le deuxième en-tête de tâche correspond à la deuxième tâche d'entraînement et possède une deuxième fonction de sortie aux données de sortie du deuxième en-tête de tâche sorties du deuxième en-tête de tâche et (ii-3) une troisième couche d'entraînement dotée d'un troisième en-tête de tâche où sont entrées les données de sortie décodées, dans lequel le troisième en-tête de tâche correspond à la troisième tâche d'entraînement et possède une fonction Softmax spécifique pour appliquer une ou plusieurs opérations de classification aux données de sortie du troisième en-tête de tâche sorties du troisième en-tête de tâche.

4. Procédé selon la revendication 3, dans lequel, à l'étape (c), en réponse à la détermination que la progression totale d'entraînement est inférieure ou égale à une deuxième progression de seuil ou à une deuxième étape de seuil, le dispositif informatique entraîne les couches partagées et les couches individuelles du modèle d'apprentissage profond et, en réponse à la détermination que la progression totale d'entraînement est supérieure à la deuxième progression de seuil ou à la deuxième étape de seuil, à condition que les couches partagées soient figées, le dispositif informatique met à jour un ou plusieurs paramètres spécifiques de modèle d'une couche individuelle spécifique parmi les couches individuelles correspondant à la tâche d'entraînement spécifique.

5. Procédé selon la revendication 1, dans lequel le modèle d'apprentissage profond (i) comprend, en tant que couche partagée, une couche d'encodage où sont entrées les données d'image acquises à partir d'au moins une caméra montée sur un véhicule autonome et (ii) comprend, en tant que couches individuelles, (ii-1) une première couche de tâche d'entraînement qui possède un premier décodeur où sont entrées les données de sortie encodées provenant de la couche d'encodage, dans lequel le premier décodeur correspond à la première tâche d'entraînement et possède une première fonction de sortie pour appliquer une ou plusieurs opérations de fonction de sortie aux premières données de sortie décodées provenant du premier décodeur, (ii-2) une deuxième couche de tâche d'entraînement qui possède un deuxième décodeur où sont entrées les données de sortie encodées, dans lequel le deuxième décodeur correspond à la deuxième tâche d'entraînement et possède une deuxième fonction de sortie pour appliquer les opérations de fonction de sortie aux deuxièmes données de sortie décodées provenant du deuxième décodeur et (ii-3) une troisième couche d'entraînement qui comporte un troisième décodeur où sont entrées les données de sortie encodées, dans lequel le troisième décodeur correspond à la troisième tâche d'entraînement et une fonction Softmax spécifique pour appliquer une ou plusieurs opérations de classification aux données de sortie décodées provenant du troisième décodeur.

6. Procédé selon la revendication 5, dans lequel, à l'étape (c), en réponse à la détermination que la progression totale d'entraînement est inférieure ou égale à une deuxième progression de seuil ou à une deuxième étape de seuil, le dispositif informatique entraîne les couches partagées et les couches individuelles du modèle d'apprentissage profond et, en réponse à la détermination que la progression totale d'entraînement est supérieure à la deuxième progression de seuil ou à la deuxième étape de seuil, et à condition que les couches partagées soient figées, le dispositif informatique met à jour un ou plusieurs paramètres de modèle spécifiques d'une couche individuelle spécifique parmi les couches individuelles correspondant à la tâche d'entraînement spécifique.

7. Procédé selon la revendication 1, comprenant en outre les étapes suivantes :

(e) en réponse à la saisie de données candidates de lignes de voie qui correspondent à la première tâche d'entraînement et sont issues du modèle d'apprentissage profond, le dispositif informatique : (i) étiquette les données candidates de lignes de voie par canal ; (ii) sélectionne un ou plusieurs blocs d'étiquettes spécifiques qui sont les plus grands parmi les blocs d'étiquettes et supprime les blocs restants ; (iii) calcule les coordonnées d'un ou plusieurs points centraux des blocs d'étiquettes spécifiques ; et (iv) applique un filtre de moyenne mobile aux coordonnées des points centraux, en déterminant ainsi les informations de prédiction sur les lignes de voie ; et
(f) le dispositif informatique effectue un ou plusieurs processus de correspondance en se référant aux informations de prédiction sur les lignes de voie et à une ou plusieurs cartes HD, en estimant ainsi une position et une posture d'un véhicule autonome.

8. Procédé selon la revendication 7, dans lequel, après l'étape (e), en réponse à l'acquisition des informations de prédiction sur les lignes de voie et des informations sur la segmentation sémantique, le dispositif informatique (i) classe certaines parties superposées entre les informations de prédiction sur les lignes de voie et les informations sur la segmentation sémantique en une ou plusieurs lignes de bordure gauche et une ou plusieurs lignes de bordure droite d'une ou plusieurs lignes de voie spécifiques, (ii) détermine une ou plusieurs coordonnées centrales superposées entre les lignes de bordure gauche et les lignes de bordure droite comme points centraux d'une ou plusieurs lignes de voie exposées, et (iii) restaure une ou plusieurs zones correspondant à une ou plusieurs lignes de voie non exposées en se référant aux lignes de bordure gauche et droite des lignes de voie exposées, en déterminant ainsi les informations de modification sur les lignes de voie ; et
dans lequel, à l'étape (f), le dispositif informatique effectue les processus de correspondance en se référant aux informations de modification sur les lignes de voie et aux cartes HD, en estimant ainsi la position et la posture du véhicule autonome.

9. Procédé d'entraînement d'un modèle d'apprentissage profond capable d'extraire une ou plusieurs caractéristiques routières sur la base de tâches multiples, comprenant les étapes suivantes :

(a) un dispositif informatique (i) définissant une première tâche d'entraînement pour l'estimation des lignes de voie sur une route, une deuxième tâche d'entraînement pour l'estimation des lignes des structures liées à la route et une troisième tâche d'entraînement pour la segmentation sémantique des lignes de voie sur la route et des structures, (ii) la définition de chacune des probabilités de sélection initiales pour chacune de la première tâche d'entraînement à la troisième tâche d'entraînement, (iii) la définition de chacun des nombres cardinaux d'une première étape d'entraînement à une troisième étape d'entraînement nécessaire pour effectuer une époque complète pour chacune de la première tâche d'entraînement à la troisième tâche d'entraînement et (iv) la détermination d'un nombre cardinal d'étapes totales incluses dans une époque complète sur la base des nombres cardinaux de la première étape d'entraînement à la troisième étape d'entraînement ;
(b) en réponse à la détermination qu'une progression totale d'entraînement est inférieure ou égale à une première progression de seuil ou à une première étape de seuil, le dispositif informatique : (i) sélectionne aléatoirement une tâche d'entraînement spécifique parmi la première tâche d'entraînement à la troisième tâche d'entraînement en se référant à chacune des probabilités de sélection initiales pour chacune de la première tâche d'entraînement à la troisième tâche d'entraînement; et (ii) calcule une ou plusieurs pertes pour la tâche d'entraînement spécifique ;
(c) le dispositif informatique met à jour un ou plusieurs paramètres de modèle liés à la tâche d'entraînement spécifique ; et
(d) en réponse à la détection que les paramètres de modèle sont mis à jour, le dispositif informatique (i) met à jour une performance d'entraînement actuelle spécifique de la tâche d'entraînement spécifique sur la base d'une étape actuelle spécifique de la tâche d'entraînement spécifique, (ii) calcule un ratio de réussite de performance d'entraînement spécifique de la tâche d'entraînement spécifique en se référant à un ratio entre la performance d'entraînement actuelle spécifique et une performance d'entraînement maximale spécifique de la tâche d'entraînement spécifique, (iii) calcule une progression d'entraînement spécifique en se référant à un premier ratio de réussite de performance d'entraînement à un troisième ratio de réussite de performance d'entraînement dont chacun correspond à la première tâche d'entraînement à la troisième tâche d'entraînement, dans lequel le ratio de réussite de performance d'entraînement spécifique est un du un premier ratio de réussite de performance d'entraînement au troisième ratio de réussite de performance d'entraînement et (iv) après l'ajout de 1 à un nombre cardinal de l'étape actuelle spécifique, si une somme des nombres cardinaux de la première étape actuelle à la troisième étape actuelle est inférieure au nombre cardinal d'étapes totales, les étapes (b), (c) et (d) sont répétées.

10. Procédé d'entraînement d'un modèle d'apprentissage profond capable d'extraire une ou plusieurs caractéristiques routières sur la base de tâches multiples, comprenant les étapes suivantes :

(a) un dispositif informatique (i) définissant une première tâche d'entraînement pour l'estimation des lignes de voie sur une route, une deuxième tâche d'entraînement pour l'estimation des lignes des structures liées à la route et une troisième tâche d'entraînement pour la segmentation sémantique des lignes de voie sur la route et des structures, (ii) la définition de chacune des probabilités de sélection initiales pour chacune de la première tâche d'entraînement à la troisième tâche d'entraînement, (iii) la définition de chacun des nombres cardinaux d'une première étape d'entraînement à une troisième étape d'entraînement nécessaire pour effectuer une époque complète pour chacune de la première tâche d'entraînement à la troisième tâche d'entraînement et (iv) la détermination d'un nombre cardinal d'étapes totales incluses dans une époque complète sur la base des nombres cardinaux de la première étape d'entraînement à la troisième étape d'entraînement ;
b) en réponse à la détermination qu'une progression totale d'entraînement est inférieure ou égale à une première progression de seuil ou à une première étape de seuil, le dispositif informatique : (i) sélectionne aléatoirement une tâche d'entraînement spécifique parmi la première tâche d'entraînement à la troisième tâche d'entraînement en se référant à chacune des probabilités de sélection initiales pour chacune de la première tâche d'entraînement à la troisième tâche d'entraînement; et (ii) calcule une ou plusieurs pertes pour la tâche d'entraînement spécifique ;
c) le dispositif informatique met à jour un ou plusieurs paramètres de modèle liés à la tâche d'entraînement spécifique ;

dans lequel, à l'étape (a), le dispositif informatique (i) définit en outre une quatrième tâche d'entraînement pour entraîner simultanément la première tâche d'entraînement à la troisième tâche d'entraînement, (ii) définit en outre une probabilité de sélection initiale pour la quatrième tâche d'entraînement, (iii) définit en outre un nombre cardinal d'une quatrième étape d'entraînement nécessaire pour compléter une époque pour la quatrième tâche d'entraînement et (iv) détermine le nombre cardinal du nombre total d'étapes incluses dans l'époque entière sur la base des nombres cardinaux de la première étape d'entraînement à la quatrième étape d'entraînement et

dans lequel, à l'étape (b), en réponse à la détermination que la progression totale d'entraînement est inférieure ou égale à la première progression de seuil ou à la première étape de seuil, le dispositif informatique (i) sélectionne aléatoirement la tâche d'entraînement spécifique parmi la première tâche d'entraînement à la quatrième tâche d'entraînement en se référant à chacune des probabilités de sélection initiales pour chacune de la première tâche d'entraînement à la quatrième tâche d'entraînement et (ii) calcule les pertes pour la tâche d'entraînement spécifique ; et

(g) en réponse à la détection que les paramètres de modèle sont mis à jour, le dispositif informatique (i) évalue une performance d'entraînement actuelle spécifique de la tâche d'entraînement spécifique sur la base d'une étape actuelle spécifique de la tâche d'entraînement spécifique, (ii) calcule un ratio de réussite de performance d'entraînement spécifique de la tâche d'entraînement spécifique en se référant à un rapport entre la performance d'entraînement actuelle spécifique et une performance d'entraînement maximale spécifique de la tâche d'entraînement spécifique, (iii) calcule une progression d'entraînement spécifique en se référant à un premier ratio de réussite de performance d'entraînement à un quatrième ratio de réussite de performance d'entraînement dont chacun correspond à la première tâche d'entraînement à la quatrième tâche d'entraînement, dans lequel le ratio de réussite de performance d'entraînement spécifique est un du premier ratio de réussite de performance d'entraînement au quatrième ratio de réussite de performance d'entraînement et (iv) après l'ajout de 1 à un nombre cardinal de l'étape actuelle spécifique, si une somme des nombres cardinaux de la première étape actuelle à la quatrième étape actuelle est inférieure au nombre cardinal d'étapes totales, les étapes (b), (c) et (g) sont répétées.

11. Dispositif informatique pour l'entraînement d'un modèle d'apprentissage profond capable d'extraire une ou plusieurs caractéristiques de la route sur la base de tâches multiples, comprenant :

au moins une mémoire qui sauvegarde les instructions ; et

au moins un processeur configuré pour exécuter les instructions pour effectuer les processus suivants : (I) (i) définir une première tâche d'entraînement pour l'estimation des lignes de voie sur une route, une deuxième tâche d'entraînement pour l'estimation des lignes des structures liées à la route et une troisième tâche d'entraînement pour la segmentation sémantique des lignes de voie sur la route et les structures, (ii) définir les probabilités de sélection initiales de chacune de la première tâche d'apprentissage et la troisième tâche d'apprentissage, (iii) définir chacun des nombres cardinaux d'une première étape d'apprentissage à une troisième étape d'apprentissage nécessaires pour compléter une époque pour chacune de la première tâche d'apprentissage à la troisième tâche d'apprentissage et (iv) déterminer un nombre cardinal d'étapes totales incluses dans une époque entière sur la base des nombres cardinaux de la première tâche d'apprentissage à la troisième tâche d'apprentissage; (II) en réponse à la détermination qu'une progression totale d'entraînement est inférieure ou égale à une première progression de seuil ou à une première étape de seuil, (i) sélectionner aléatoirement une tâche d'entraînement spécifique parmi la première tâche d'entraînement à la troisième tâche d'entraînement en se référant à chacune des probabilités de sélection initiales pour chacune de la première tâche d'entraînement à la troisième tâche d'entraînement et (ii) calculer une ou plusieurs pertes pour la tâche d'entraînement spécifique ; et (III) mettre à jour un ou plusieurs paramètres de modèle liés à la tâche d'entraînement spécifique ;

dans lequel, au cours du processus (II), en réponse à la détection que la progression totale d'entraînement est supérieure à la première progression de seuil ou à la première étape de seuil, le processeur : (i) calcule un ratio de performance d'entraînement spécifique pour une tâche d'entraînement spécifique en se référant à un ratio entre une performance d'entraînement actuelle spécifique sur la tâche d'entraînement spécifique et une performance d'entraînement maximale spécifique ; (ii) calcule une pondération d'entraînement spécifique correspondant à la tâche d'entraînement spécifique en se référant au ratio de performance d'entraînement spécifique ; (iii) calcule une probabilité de sélection ajustée pour la tâche d'entraînement spécifique en se référant à la pondération d'entraînement spécifique et à un nombre cardinal d'une étape d'entraînement spécifique ; et (iv) détermine une probabilité que la tâche d'entraînement spécifique soit sélectionnée parmi la première tâche d'entraînement à la troisième tâche d'entraînement, en tant que probabilité de sélection ajustée.

12. Dispositif informatique selon la revendication 11, dans lequel, au cours du processus (II), (i) la pondération d'entraînement spécifique est représentée comme un résultat de la soustraction de 1 d'un rapport entre la pondération d'entraînement spécifique et une somme d'un premier ratio de réussite de performance d'entraînement à un troisième ratio de réussite de performance d'entraînement et (ii) la probabilité de sélection ajustée est représentée comme un résultat de la multiplication de la pondération d'entraînement spécifique par un rapport entre le nombre cardinal de l'étape d'entraînement spécifique et une somme des nombres cardinaux de la première étape d'entraînement à la troisième étape d'entraînement.

# FIG. 1

100

MEMORY — 110

PROCESSOR — 120

# FIG. 2

(i)SETTING A 1-ST TRAINING TASK TO 3-RD TRAINING TASK
(ii)SETTING EACH OF INITIAL SELECTION PROBABILITIES FOR EACH OF THE 1-ST TRAINING TASK TO THE 3-RD TRAINING TASK
(iii)SETTING EACH OF TRAINING PERFORMANCE ACHIEVEMENT RATIOS OF THE 1-ST TRAINING TASK TO THE 3-RD TRAINING TASK = 0
(iv)SETTING A TOTAL TRAINING PROGRESS = 0 — S211

SETTING EACH CARDINAL NUMBERS OF A 1-ST TRAINING STEP TO THE 3-RD TRAINING STEP AND TOTAL STEPS — S212

COMPLETE TRAINING — S250

A SUM OF THE CARDINAL NUMBER OF THE 1-ST CURRENT STEP TO THE 3-RD CURRENT STEP > THE CARDINAL NUMBER OF THE TOTAL STEPS — S213   NO   YES

THE TOTAL TRAINING PROGRESS > A 1-ST THRESHOLD PROGRESS OR THE TOTAL TRAINING PROGRESS > A 1-ST THRESHOLD STEP — S214   NO   YES

DETERMINING A PROBABILITY OF THE SPECIFIC TRAINING TASK BEING SELECTED — S215

RANDOMLY SELECTING THE SPECIFIC TRAINING TASK — S221

CALCULATING LOSSES FOR THE SPECIFIC TRAINNG TASK — S222

THE TOTAL TRAINING PROGRESS > A 2-ND THRESHOLD PROGRESS OR THE TOTAL TRAINING PROGRESS > A 2-ND THRESHOLD STEP — S223   NO   YES

FREEZING SHARED LAYERS — S224

UPDATING MODEL PARAMETERS RELATED TO THE SPECIFIC TRAINING TASK — S230

EVALUATING A SPECIFIC CURRENT TRAINING PERFORMANCE OF THE SPECIFIC TRAINING TASK BASED ON A SPECIFIC CURRENT STEP OF THE SPECIFIC TRAINING TASK — S241

CALCULATING A SPECIFIC TRAINING PERFORMANCE ACHIEVEMENT RATIO AND A TOTAL TRAINING PROGRESS — S242

ADDING 1 TO A CARDINAL NUMBER OF THE CURRENT STEP OF THE SPECIFIC TRAINING TASK — S243

EP 4 576 017 B1

# FIG. 3

300

IMAGE DATA

310  320

INPUT | ENCODING LAYER | DECODING LAYER

321

LANE LINE CANDIDATE DATA

322

STRUCTURE LINE CANDIDATE DATA

323

SEMANTIC SEGMENTATION

340

EXTRACTING LINE PROPERTIES

EXTRACTING PLANE PROPERTIES

POST-PROCESSING

341

MODIFICATION INFORMATION

360

MATCHING THE MODIFICATION INFORMATION AND THE HD MAPS

ESTIMATING A POSITION AND A POSTURE OF AN AUTONOMOUS VEHICLE

350

HD MAP

# FIG. 4

IMAGE DATA

300

GT DATA FOR TRAINING THE LANE LINES

331

GT DATA FOR TRAINING THE STRUCTURES ON THE ROAD

332

GT DATA FOR TRAINING SEGMENTATION

333

# FIG. 5

IMAGE DATA — 300

input | ENCODING LAYER (310) | DECODING LAYER (320) — SHARED LAYERS

**1-ST TRAINING TASK LAYER** (510)
1-ST TASK HEADER (511) → 1-ST OUTPUT FUNCTION (512)

**2-ND TRAINING TASK LAYER** (520)
2-ND TASK HEADER (521) → 2-ND OUTPUT FUNCTION (522)

**3-RD TRAINING TASK LAYER** (530)
3-RD TASK HEADER (531) → SOFTMAX (532)

EP 4 576 017 B1

# FIG. 6

EP 4 576 017 B1

FIG. 7

FIG. 8

## REFERENCES CITED IN THE DESCRIPTION

**Patent documents cited in the description**

- KR 1020230190502
- CN 111178253 A
- CN 112347933 A

**Non-patent literature cited in the description**

- Multi-Task Deep Learning Design and Training Tool for Unified Visual Driving Scene Understanding. **WON WOONG-JAE et al.** 2019 19TH INTERNATIONAL CONFERENCE ON CONTROL, AUTOMATION AND SYSTEMS (ICCAS). INSTITUTE OF CONTROL, ROBOTICS AND SYSTEMS - ICROS, 15 October 2019, 356-360
- Lane line detection based on the codec structure of the attention mechanism. **ZHAO QINGHUA et al.** JOURNAL OF REAL-TIME IMAGE PROCESSING. SPRINGER, 09 May 2022, vol. 19, 715-726
- PolyLaneNet: Lane Estimation via Deep Polynomial Regression. **TABELINI LUCAS et al.** 2020 25TH INTERNATIONAL CONFERENCE ON PATTERN RECOGNITION (ICPR). IEEE, 10 January 2021, 6150-6156